(19) Europäisches Patentamt
European Patent Office
Office européen des brevets

(11) Veröffentlichungsnummer: **0 093 856**
**A1**

(12) **EUROPÄISCHE PATENTANMELDUNG**

(21) Anmeldenummer: **83102409.6**

(22) Anmeldetag: **11.03.83**

(51) Int. Cl.³: **C 07 C 69/54**, C 08 F 20/18

(30) Priorität: **06.05.82 DE 3216987**

(43) Veröffentlichungstag der Anmeldung: **16.11.83**
**Patentblatt 83/46**

(84) Benannte Vertragsstaaten: **BE DE FR GB IT NL SE**

(71) Anmelder: **CHEMISCHE WERKE HÜLS AG, - RSP Patente / PB 15 - Postfach 13 20, D-4370 Marl 1 (DE)**

(72) Erfinder: **Stützel, Bernhard, Dr., Stargarder Strasse 32, D-4370 Marl (DE)**

(54) **Phenylsubstituierter Acrylsäureester und dessen Verwendung.**

(57) Beanspruchen werden phenylsubstituierte Acrylsäureester der Formel

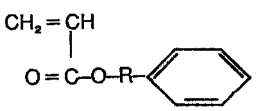

in der
R einen geradkettigen oder verzweigten Alkylenrest mit 3 bis 4 Kohlenstoffatomen bedeutet, der gegebenenfalls durch eine Ethersauerstoffbrücke unterbrochen ist und dessen Verwendung zur Herstellung von Polymeren, welche sich als schlagzäh machende Komponente zur Herstellung hochschlagfester, transparenter Formmassen auf Polyvinylchlorid-Basis einsetzen lassen.

EP 0 093 856 A1

## Phenylsubstituierter Acrylsäureester und dessen Verwendung

Phenylsubstituierte Acrylsäureester mit längerer aliphatischer Kette im Alkoholteil sind bereits bekannt (US-PS 3 751 449). Es handelt sich dabei beispielsweise um 5-Phenyl-n-pentyl-acrylat oder 6-Phenyl-n-hexyl-acrylat bzw. deren höhere Homologe. Diese monomeren Verbindungen werden eingesetzt als Zwischenprodukte zur Herstellung von Polymeren. Diese Polymere können als druckempfindliche Klebstoffe eingesetzt werden (vgl. US-PS 3 751 449, Spalte 1, Zeilen 14 bis 39).

Bislang nicht beschrieben und somit neu sind phenylsubstituierte Acrylsäureester der Formel

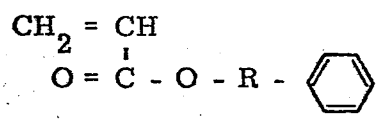
, in der

R einen geradkettigen oder verzweigten Alkylenrest mit 3 bis 4 Kohlenstoffatomen bedeutet, der gegebenenfalls durch eine Ethersauerstoffbrücke unterbrochen ist, wobei der geradkettige Anteil wenigstens 3 Kohlenstoffatome enthält.

Bei diesen neuen Verbindungen handelt es sich beispielsweise um folgende Individuen:

3-Phenyl-n-propyl-acrylat:

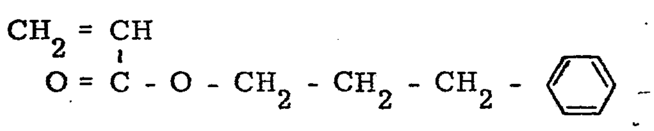

4-Phenyl-n-butyl-acrylat:

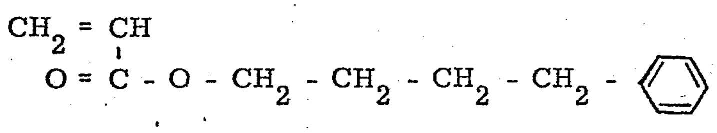

(3-Phenyl-1-methyl)-propyl-acrylat:

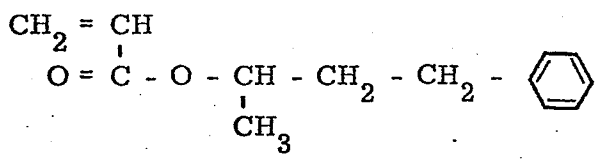

(3-Phenyl-2-methyl)-propyl-acrylat:

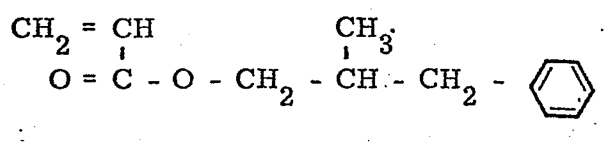

(3-Phenyl-3-methyl)-propyl-acrylat:

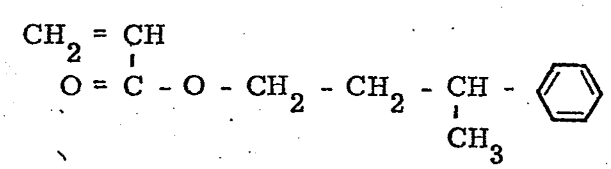

2-Phenylethyl-oxyethyl-acrylat:

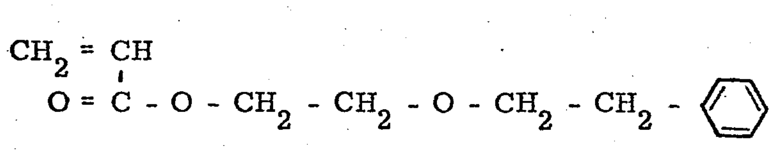

Benzyl-oxyisopropyl-acrylat:

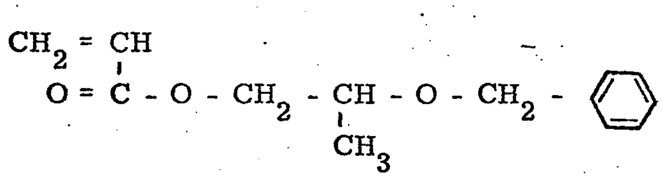

3-Phenylpropyl-oxymethyl-acrylat:

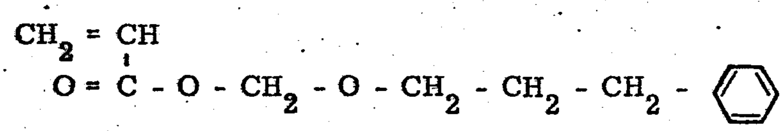

Benzyl-oxypropyl-acrylat:

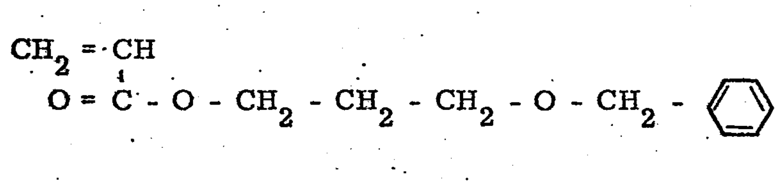

Herstellbar sind die erfindungsgemäßen Acrylsäureester unter anderem durch direkte Veresterung der einschlägigen Alkohole mit Acrylsäure.

Zugrundeliegende Alkohole können z. B. nach folgenden bereits beschriebenen Methoden hergestellt werden:

1. Das 3-Phenylpropanol-1 kann aus Styrol durch Anlagerung von 2 Mol Formaldehyd und anschließender Hydrierung hergestellt werden (Organic Syntheses, Vol. IV, Seiten 786/787 und Seiten 798/799).

2. Das 4-Phenylbutanol-1 kann aus ß-Phenethylmagnesiumbromid und Ethylenoxid hergestellt werden (J. Am. Chem. Soc. 46, 242).

3. Das 1-Methyl-3-phenyl-propanol-1 kann man aus Methyl-(phenylethyl)-keton durch Reduktion erhalten (Collect. Czech. Chem. Commun. 1976, 41 (8), 2264).

4. 3-Phenyl-3-methyl-propanol-1 kann nach vorangegangener Transmetallierung durch Umsetzung der α-Natriumverbindung des Ethylbenzols mit Ethylenoxid erhalten werden (Japan. Kokai 73 75 551, 14.01.1972).

5. Das 2-Methyl-3-phenylpropanol-1 kann durch Alanat-Reduktion des Natriumsalzes von Benzylmalonsäurediethylester erhalten werden (Chem. Ber. 1970, 103, 3771).

6. Ethylenglykolmonophenethylether erhält man aus 2-phenylethanol und Ethylenoxid unter Säurekatalyse (Bull. soc. chem. 8 (1941), 170 - 85).

Die erfindungsgemäßen phenylsubstituierten Acrylsäureester sind Zwischenprodukte. Sie lassen sich durch übliche Polymerisation in Masse, Lösung, Emulsion und Suspension zu Polymerisaten umsetzen, und zwar in der Weise, wie dies z. B. in der Monographie Monomeric Acrylic Esters von Riddle, Reinhold Publishing Corp. (1954) von Seite 37 bis Seite 56 oder auch in der Monographie Acrylic Resins von Horn, Reinhold Publishing Corp. (1960) von Seite 26 bis Seite 29 beschrieben ist.

Besonders zweckmäßig ist die Herstellung der Polymerisate durch Emulsionspolymerisation.

Als Emulgatoren lassen sich die bekannten Typen einsetzen. Es kommen insbesondere ionogene infrage, z. B. Salze von Carbonsäure, wie Natriumcaprinat, -laurat, -myristat, -palmitat. Weiterhin eignen sich Salze primärer und sekundärer Alkylsulfate, z. B. Natriumcaprylsulfat, -laurylsulfat, -myristylsulfat und -oleylsulfat. Ebenso kommen infrage Sulfate veresterter Polyoxyverbindungen, wie monofettsaurer Glycerinschwefelsäureester, Salze primärer und sekundärer Alkylsulfonate, wie Natriummethylsulfonat, -stearylsulfonat, -oleylsulfonat, n-Alkansulfonate mit statistischer Verteilung der Sulfonsäuregruppe und Kettenlänge $C_{13}$ bis $C_{17}$ usw. Es können auch Alkylarylsulfonate eingesetzt werden, z. B. das Na-Salz der p-n-Dodecylbenzolsulfonsäure.

Weiterhin kommen auch Gemische von Emulgatoren in Betracht. Zu den genannten Emulgatoren können auch zusätzlich Hilfsstoffe beigegeben werden, z. B. Alkohole wie Laurylalkohol, Ester wie Sorbitmonolaurat und Carbonsäureglykolester.

Die Konzentration der Emulgatoren kann 0,1 bis 3 Gewichtsprozent, vorzugsweise 0,5 bis 2 Gewichtsprozent, bezogen auf Monomere, betragen. Auch die emulgatorfreie Emulsionspolymerisation kommt infrage.

Als Katalysatoren kommen die bei der Emulsionspolymerisation üblicherweise angewandten wasserlöslichen Verbindungen infrage, wie wasserlösliches Persulfat, z. B. Na- oder K-Persulfat gegebenenfalls kombiniert mit einer reduzierenden Komponente, wie wasserlösliches Bisulfit, Hydrosulfit, Hydrazin, Thiosulfat, Formaldehydsulfoxylate; Wasserstoffperoxid kombiniert mit reduzierenden Komponenten, wie Bisulfit, Hydrazin, Hydroxylamin oder Ascorbinsäure, ferner wasserlösliches Persulfat kombiniert mit Wasserstoffperoxid und einer aktivierenden Komponente, wie Kupfersalze, welche im alkalischen Medium mit Komplexbildnern, wie Pyrophosphaten einzusetzen sind. Es werden die üblichen Konzentrationen angewendet.

Die Polymerisationstemperatur kann 5 bis 120 $^{o}C$ betragen, vorzugsweise jedoch 40 bis 90 $^{o}C$. Die Polymeren haben in der Regel eine breite Molekulargewichtsverteilung, wie anhand der Beispiele später erläutert wird. In den Molekulargewichtsmittelwerten, ermittelt durch Gelpermeationschromatografie (GPC), zeigen sich diese breiten Molekulargewichtsverteilungen, indem zahlenmittlere Molekulargewichtswerte von $5 \cdot 10^3$ bis $5 \cdot 10^4$ und gewichtsmittlere Molekulargewichtswerte von $5 \cdot 10^5$ bis $5 \cdot 10^8$ möglich sind.

Es ist auch möglich, die Polymerisationen der erfindungsgemäßen phenylsubstituierten Acrylsäureester in Gegenwart vernetzend wirkender Verbindungen surchzuführen. Ebenso besteht die Möglichkeit, Polymerisate der erfindungsgemäßen phenylsubstituierten Acrylsäureester mit vernetzend wirkenden Verbindungen umzusetzen. Solche Maßnahmen erlauben es, die Gehalte an vernetzten Polymeranteilen zu beeinflussen.

Als vernetzend wirkende Verbindungen kommen infrage: Divinylbenzol, Divinylester von zwei- und dreibasischen Säuren, wie Divinyladipat, Diallylester von mehrfunktionellen Säuren (Diallylphthalat), Divinylether von mehrwertigen Alkoholen (Divinylether von Ethylenglykol), di- und tri-Methacrylate und -acrylate mehrwertiger Alkohole. Besonders geeignet sind die handelsüblichen Vertreter der letztgenannten Gruppe, da sie sich mit Acrylsäureestern gut mischpolymerisieren lassen und dem fertigen Gemisch eine bessere thermische Stabilität verleihen. Beispielsweise seien erwähnt: Ethylenglykoldimethacrylat, Propylenglykoldimethacrylat, 1,3-Butylenglykoldimethacrylat, 1,4-Butylenglykoldimethacrylat sowie die entsprechenden Diacrylate.

Die so erhaltenen Polymerisate lassen sich als schlagzäh machende Komponente dem an sich starren Polyvinylchlorid zusetzen und ergeben in völlig überraschender Weise Formmassen mit besonders hoher Schlagzähigkeit und Transparenz.

Es waren zwar bereits transparente schlagzähe Polyvinylchlorid-Formmassen bekannt, deren modifizierende Komponenten auch einen Acrylatanteil besitzen, jedoch handelt es sich dabei durchweg um vergleichsweise kompliziert aufgebaute Mischungen von Mischpolymeren und Pfropfpolymeren, wie dies beispielsweise in der DE-PS 26 21 522 und in der DE-AS 20 13 020 der Fall ist. Es war daher nicht zu erwarten, daß der Zusatz eines einzigen Homopolymeren zu Polyvinylchlorid hochschlagfeste, hochtransparente Formmassen ergeben würde, deren Schlagfestigkeit und Transparenz sogar diejenige von so

kompliziert aufgebauten Formmassen, wie sie gemäß DE-AS 20 13 020 herstellbar sind, noch übertrifft (vgl. Tabelle 1). Als Polyvinylchlorid kann jedes beliebig hergestellte Polyvinylchlorid eingesetzt werden; es erscheint jedoch am zweckmäßigsten, die Polyvinylchloride mittels radikalischer Initiatoren in Masse, Suspension, Emulsion oder Lösung herzustellen und Molekulargewichte von 35 000 bis 150 000 anzustreben (K-Wert 40 bis 90).

Das Einbringen der schlagzäh machenden Polymerisate kann durch alle bekannten Verfahren des Modifizierens durchgeführt werden, nämlich durch Pfropfpolymerisation von Vinylchlorid auf das Polymere des erfindungsgemäßen Acrylsäureesters oder durch beliebige Arten des Mischens von Polyvinylchlorid mit dem Polyacrylat, z. B. durch Mischen im festen Zustand auf einem Walzenmischer, einem Banburg-Mischer, einem Plastographen, einem Compoudier-Extruder oder dergleichen. Das Polyvinylchlorid und das Polyacrylat können auch in Latexform miteinander vermischt und anschließend in üblicher Weise getrocknet werden, z. B. durch Sprühtrocknung.

Die Erfindung wird durch die folgenden Beispiele erläutert.

A) Herstellung des phenylsubstituierten Acrylsäureesters

Beispiel 1

In einem 4 l-Dreihalskolben mit Rührer, Rückflußkühler, Wasserauskreiser, Tropftrichter und Heizeinrichtung werden vorgelegt:

| | | | |
|---|---|---|---|
| 43 | Teile | (2 150 g) | 3-Phenylpropanol-1 |
| 10 | Teile | (500 g) | Toluol |
| 0,4 | Teile | (20 g) | Toluolsulfonsäure |
| 0,02 | Teile | (1 g) | Hydrochinon |

Im Tropftrichter befinden sich 17,3 Teile (865 g) Acrylsäure.

Aus dem Tropftrichter werden unter Rührung 0,5 Teile (25 g) Acrylsäure in das vorgelegte Reaktionsgemisch gegeben und der Kolbeninhalt auf 150 bis 170 °C aufgeheizt. Wenn sich am Wasserabscheider das erste Wasser absetzt, wird die restliche Acrylsäure innerhalb von ca. 3 Stunden zugetropft und portionsweise das jeweils ausgeschiedene Wasser abgezogen, bis mindestens 95 % der theoretisch zu erwartenden Wassermenge erreicht sind.

Zur Aufarbeitung wird das erkaltete Produkt mit $NaHCO_3$-Lösung und Wasser gewaschen, die wäßrige Phase im Scheidetrichter abgetrennt und die organische Phase destilliert. Nach Abdestillation von Toluol bei ca. 100 mbar werden Acrylsäureester und Alkohol über eine Kolonne getrennt.

| | |
|---|---|
| Siedepunkt des 3-Phenylpropanol-1: | 109 °C/6 mbar |
| Siedepunkt des 3-Phenylpropanol-1-Acrylsäureesters: | 120 °C/6 mbar |

Beispiel 2

In der unter Beispiel 1 beschriebenen Weise werden vorgelegt:

| | | | |
|---|---|---|---|
| 47 | Teile | (2 350 g) | 4-Phenylbutanol-1 |
| 10 | Teile | ( 500 g) | Toluol |
| 0,4 | Teile | (20 g) | Toluolsulfonsäure |
| 0,02 | Teile | (1 g) | Hydrochinon |

Im Tropftrichter befinden sich 17,3 Teile (865 g) Acrylsäure.

Reaktionsführung und Aufarbeitung geschehen in der unter Beispiel 1 beschriebenen Weise.

Siedepunkt des 4-Phenylbutanol-1: 116 °C/6 mbar
Siedepunkt des 4-Phenylbutanol-1-Acrylsäureesters: 126 °C/6 mbar

Beispiel 3

In der unter Beispiel 1 beschriebenen Weise werden vorgelegt:

| | | | |
|---|---|---|---|
| 47 | Teile | (2 350 g) | 3-Phenyl-3-methyl-propanol-1 |
| 10 | Teile | (500 g) | Toluol |
| 0,4 | Teile | (20 g) | Toluolsulfonsäure |
| 0,02 | Teile | (1 g) | Hydrochinon |

Im Tropftrichter befinden sich 17,3 Teile (865 g) Acrylsäure.

Reaktionsführung und Aufarbeitung geschehen in der unter Beispiel 1 beschriebenen Weise.

Siedepunkt des 3-Phenyl-3-methyl-propanol-1: 114 °C/6 mbar
Siedepunkt des 3-Phenyl-3-methyl-propanol-1-Acrylsäureesters: 123 °C/6 mbar

Beispiel 4

In der unter Beispiel 1 beschriebenen Weise werden vorgelegt:

| | | | |
|---|---|---|---|
| 47 | Teile | (2 350 g) | 3-Phenyl-2-methyl-propanol-1 |
| 10 | Teile | (500 g) | Toluol |
| 0,4 | Teile | (20 g) | Toluolsulfonsäure |
| 0,02 | Teile | (1 g) | Hydrochinon |

Im Tropftrichter befinden sich 17,3 Teile (865 g) Acrylsäure.

Reaktionsführung und Aufarbeitung geschehen in der unter Beispiel 1 beschriebenen Weise.

Siedepunkt des 3-Phenyl-2-methyl-propanols: 114 °C/6 mbar
Siedepunkt des 3-Phenyl-2-methyl-propanol-acrylsäureesters: 123 °C/6 mbar

Beispiel 5

In der unter Beispiel 1 beschriebenen Weise werden vorgelegt:

47 Teile (2 350 g) 3-Phenyl-1-methyl-propanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.

Reaktionsführung und Aufarbeitung geschehen in der unter Beispiel 1 beschriebenen Weise

Siedepunkt des 3-Phenyl-1-methyl-propanol-1: 114 °C/6 mbar
Siedepunkt des 3-Phenyl-1-methyl-propanol-1-acrylsäureesters: 123 °C/6 mbar

Beispiel 6

In der unter Beispiel 1 beschriebenen Weise werden vorgelegt:

50 Teile (2 500 g) Ethylenglykolmonophenethylether
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.

Reaktionsführung und Aufarbeitung geschehen in der unter Beispiel 1 beschriebenen Weise.

Siedepunkt des Ethylenglykolmonophenethylethers: 122 °C/6 mbar
Siedepunkt des Ethylenglykolmonophenethylether-acrylsäureesters: 132 °C/6 mbar

B) Herstellung des Poly-Acrylsäureesters

Beispiel 7

In einem 2 l-Stahlautoklaven mit Rührer, Temperierung sowie üblichen Einrichtungen zum Evakuieren, Begasen mit $N_2$, Einfüllen und Zudosieren von Reaktanten (Hersteller z. B. Fa. SFS/Buechi, Uster, Schweiz) werden vorgelegt:

| | | | |
|---|---|---|---|
| 20 | Teile | (250 g) | 3-Phenylpropanol-1-acrylsäureester |
| 76 | Teile | (950 g) | VE-Wasser |
| 0,24 | Teile | (3 g) | Na-Laurat |

In die Vorlage der Dosiereinrichtung werden gegeben:

| | | | |
|---|---|---|---|
| 0,012 | Teile | (0,15 g) | Ammoniumperoxodisulfat |
| 4 | Teile | (50 g) | VE-Wasser |

Nach Entgasen und Spülen mit $N_2$ wird der Reaktorinhalt unter 2 bar $N_2$-Überdruck auf 80 °C aufgeheizt. Während des Aufheizens werden 5 ml der Ammoniumperoxodisulfat-Lösung zugegeben, der Rest wird gleichmäßig im Verlauf von 120 Minuten zudosiert und die Reaktionstemperatur auf 80 °C gehalten. Nach weiteren 30 Minuten ist die Reaktion beendet. Man läßt abkühlen und erhält einen weißen stabilen Polyacrylat-Latex.

Diese Polyacrylate haben eine sehr breite Molekulargewichtsverteilung. Zur eingehenden Charakterisierung dieser Verteilung wird die Gelpermeationschromatographie (GPC) herangezogen, wozu jeweils

eine Lösung des Polymeren in Tetrahydrofuran diente. Auf diese Weise können die Molekulargewichtsverteilung und die in der Polymercharakterisierung üblichen Molekulargewichtsmittelwerte - das Zahlenmittel $M_n = \sum niMi/\sum ni$ und das Gewichtsmittel $M_w = \sum niMi^2/\sum niMi$ - angegeben werden:

$$M_n = 8,1 \cdot 10^3 \qquad M_w = 13,4 \cdot 10^7$$

Die Molekulargewichtsverteilungskurve ist in Figur 1 wiedergegeben.

Beispiel 7 a

In der in Beispiel 7 verwendeten Apparatur wird in der dort beschriebenen Weise auch in Gegenwart von vernetzend wirkenden Substanzen polymerisiert. Hierzu werden vorgelegt:

| | | | |
|---|---|---|---|
| 20 | Teile | (250 g) | 3-Phenylpropanol-1-acrylsäureester |
| 76 | Teile | (950 g) | VE-Wasser |
| 0,2 | Teile | (2,5 g) | Diallylphthalat |
| 0,24 | Teile | (3,0 g) | Na-Laurat |

In die Vorlage der Dosiereinrichtung werden gegeben:

| | | | |
|---|---|---|---|
| 0,012 | Teile | (0,15 g) | Ammoniumperoxodisulfat |
| 4 | Teile | (50 g) | VE-Wasser |

Man erhält einen weißen stabilen Polyacrylat-Latex. Die Molekulargewichtscharakterisierung durch GPC (vgl. Anmerkung bei Beispiel 7) ergibt

$$M_n = 2,4 \cdot 10^4 \qquad M_w = 21 \cdot 10^7$$

Die Molekulargewichtsverteilung ist in Figur 2 wiedergegeben.

## Beispiele 8 bis 12

In der in Beispiel 7 verwendeten Apparatur werden in der dort beschriebenen Weise die nach den Beispielen 2 bis 6 hergestellten Acrylsäureester polymerisiert. Hierzu verwendet man jeweils:

20 Teile (250 g) phenylsubstituierte Acrylsäureester
76 Teile (950 g) VE-Wasser
0,24 Teile (3 g) Na-Laurat

In die Vorlage der Dosiereinrichtung werden gegeben:

0,012 Teile (0,15 g) Ammoniumperoxodisulfat
4 Teile (50 g) VE-Wasser

Man erhält jeweils einen weißen, stabilen Polyacrylat-Latex.

Die Molekulargewichtscharakterisierung durch GPC (vgl. Anmerkung bei Beispiel ~~1~~ 7) ergibt

bei Beispiel 8 $M_n = 9,3 \cdot 10^3$, $M_w = 14,4 \cdot 10^7$
Molekulargewichtsverteilungskurve siehe Figur 3;

bei Beispiel 9 $M_n = 8,5 \cdot 10^3$, $M_w = 13,5 \cdot 10^7$
Molekulargewichtsverteilungskurve siehe Figur 4;

bei Beispiel 10 $M_n = 8,4 \cdot 10^3$, $M_w = 12,3 \cdot 10^7$
Molekulargewichtsverteilungskurve siehe Figur 5;

bei Beispiel 11 $M_n = 8,2 \cdot 10^3$, $M_w = 11,5 \cdot 10^7$
Molekulargewichtsverteilungskurve siehe Figur 6;

bei Beispiel 12 $M_n = 7,6 \cdot 10^3$, $M_w$ $12,1 \cdot 10^7$
Molekulargewichtsverteilungskurve siehe Figur 7.

Beispiele 8 a bis 12 a

Die in den Beispielen 8 bis 12 beschriebenen Polymerisationen der nach Beispiel 2 bis 6 hergestellten Acrylsäureester werden auch in Gegenwart von vernetzend wirkenden Substanzen durchgeführt. Hierzu verwendet man jeweils:

20 Teile (250 g) phenylsubstituierte Acrylsäureester
76 Teile (950 g) VE-Wasser
0,2 Teile (2,5 g) Diallylphthalat
0,24 Teile (3,0 g) Na-Laurat

In die Vorlage der Dosiereinrichtung werden gegeben:

0,012 Teile (0,15 g) Ammoniumperoxodisulfat
4 Teile (50 g) VE-Wasser

Man erhält jeweils einen weißen, stabilen Polyacrylat-Latex.

Die Molekulargewichtscharakterisierung durch GPC (vgl. Anmerkung bei Beispiel 7) ergibt

bei Beispiel 8 a $M_n = 3,14 \cdot 10^4$, $M_w = 33,8 \cdot 10^7$
Molekulargewichtsverteilungskurve siehe Figur 8;

bei Beispiel 9 a $M_n = 2,45 \cdot 10^4$, $M_w = 21,1 \cdot 10^7$
Molekulargewichtsverteilungskurve siehe Figur 9;

bei Beispiel 10 a $M_n = 3,05 \cdot 10^4$, $M_w = 33,2 \cdot 10^7$
Molekulargewichtsverteilungskurve siehe Figur 10;

bei Beispiel 11 a $M_n = 2,8 \cdot 10^4$, $M_w = 26,3 \cdot 10^7$
Molekulargewichtsverteilungskurve siehe Figur 11;

bei Beispiel 12 a $M_n = 2,3 \cdot 10^4$, $M_w = 20,3 \cdot 10^7$
Molekulargewichtsverteilungskurve siehe Figur 12.

Beispiele 13 bis 18

Mittels der in Beispiel 7 beschriebenen Apparatur können auch Copolymere der phenylsubstituierten Acrylsäureester mit Alkylacrylaten hergestellt werden. Hierzu werden z. B. eingesetzt:

| | | | |
|---|---|---|---|
| 18 | Teile | (225 g) | phenylsubstituierte Acrylsäureester, hergestellt nach den Beispielen 1 bis 6 |
| 2 | Teile | (50 g) | Butylacrylat |
| 76 | Teile | (950 g) | VE-Wasser |
| 0,24 | Teile | (3 g) | Na-Laurat |

In die Vorlage der Dosiereinrichtung werden gegeben:

| | | | |
|---|---|---|---|
| 0,012 | Teile | (0,15 g) | Ammoniumperoxodisulfat |
| 4 | Teile | (50 g) | VE-Wasser |

Man erhält jeweils einen weißen, stabilen Polyacrylat-Latex.

Die Molekulargewichtscharakterisierung durch GPC (vgl. Anmerkung bei Beispiel 7) ergibt

bei Beispiel 13 $M_n = 9,6 \cdot 10^3$, $M_w = 14,8 \cdot 10^7$
Molekulargewichtsverteilungkurve siehe Figur 13;

bei Beispiel 14 $M_n = 8,2 \cdot 10^3$, $M_w = 13,3 \cdot 10^7$
Molekulargewichtsverteilungskurve siehe Figur 14;

bei Beispiel 15 $M_n = 7,9 \cdot 10^3$, $M_w = 12,6 \cdot 10^7$
Molekulargewichtsverteilungskurve siehe Figur 15;

bei Beispiel 16 $M_n = 7,4 \cdot 10^3$, $M_w$ $11,3 \cdot 10^7$
Molekulargewichtsverteilungskurve siehe Figur 16;

bei Beispiel 17 $M_n = 8,9 \cdot 10^3$, $M_w = 15,1 \cdot 10^7$
Molekulargewichtsverteilungskurve siehe Figur 17;

bei Beispiel 18 $M_n = 8,0 \cdot 10^3$, $M_w = 13,6 \cdot 10^7$
Molekulargewichtsverteilungskurve siehe Figur 18.

Beispiele 13 a bis 18 a

Die in den Beispielen 13 bis 18 beschriebenen Polymerisationen werden auch in Gegenwart von vernetzend wirkenden Substanzen durchgeführt. Hierzu werden z. B. eingesetzt:

| | | | |
|---|---|---|---|
| 18 | Teile | (225 g) | phenylsubstituierte Acrylsäureester, hergestellt nach den Beispielen 1 bis 6 |
| 2 | Teile | (50 g) | Butylacrylat |
| 76 | Teile | (950 g) | VE-Wasser |
| 0,2 | Teile | (2,5 g) | Diallylphthalat |
| 0,24 | Teile | (3,0 g) | Na-Laurat |

In die Vorlage der Dosiereinrichtung werden gegeben:

| | | | |
|---|---|---|---|
| 0,012 | Teile | (0,15 g) | Ammoniumperoxodisulfat |
| 4 | Teile | (50 g) | VE-Wasser |

Man erhält jeweils einen weißen, stabilen Polyacrylat-Latex.

Die Molekulargewichtscharakterisierung durch GPC (vgl. Anmerkung bei Beispiel 7) ergibt

bei Beispiel 13 a $M_n = 3,1 \cdot 10^4$, $M_w = 29,7 \cdot 10^7$
Molekulargewichtsverteilungskurve siehe Figur 19;

bei Beispiel 14 a $M_n = 2,6 \cdot 10^4$, $M_w = 25,6 \cdot 10^7$
Molekulargewichtsverteilungskurve siehe Figur 20;

bei Beispiel 15 a $M_n = 2,96 \cdot 10^4$, $M_w = 24,9 \cdot 10^7$
Molekulargewichtsverteilungskurve siehe Figur 21;

bei Beispiel 16 a $M_n = 2,76 \cdot 10^4$, $M_w = 30,8 \cdot 10^7$
Molekulargewichtsverteilungskurve siehe Figur 22;

bei Beispiel 17 a $M_n = 2,1 \cdot 10^4$, $M_w = 29,4 \cdot 10^7$
Molekulargewichtsverteilungskurve siehe Figur 23;

bei Beispiel 18 a $M_n = 2,8 \cdot 10^4$, $M_w = 30,1 \cdot 10^7$
Molekulargewichtsverteilungskurve siehe Figur 24.

C) Herstellung der Mischung aus Polyvinylchlorid und Polyacrylsäureester

a) Pfropfpolymerisation von Vinylchlorid mit Polyacrylsäureester

Beispiele 19 bis 32

In einem 2 l-Stahlautoklaven der unter B) beschriebenen Bauart werden vorgelegt:

| | | | |
|---|---|---|---|
| 50 | Teile | (200 g) | Polyacrylat-Latex, hergestellt nach den Beispielen 7, 7a, 8, 8a, 12, 12a, 13, 13a, 14, 14a, 15, 15a, 18, 18a (dies entspricht jeweils 40 g festem Polymeren und 160 g Wasser) |
| 160 | Teile | (640 g) | VE-Wasser |
| 0,03 | Teile | (0,12 g) | Sorbitmonolaurat |
| 0,08 | Teile | (0,32 g) | Lauroylperoxid |
| 0,06 | Teile | (0,24 g) | Dicetylperoxydicarbonat |

Nachdem das vorgelegte Gemisch entgast und mit Stickstoff gespült ist, werden unter Rühren bei 200 bis 300 U/m

90 Teile (360 g) Vinylchlorid

in den Autoklaven eingedrückt und anschließend die Rührdrehzahl auf 350 U/m erhöht. Dann werden

| | | | |
|---|---|---|---|
| 0,4 | Teile | (1,6 g) | Hydroxyethylcellulose gelöst in |
| 50 | Teile | (200 g) | VE-Wasser |

zugegeben und 2 bar $N_2$-Druck aufgegeben.

Der Reaktorinhalt wird auf 60 °C aufgeheizt und bei dieser Temperatur bis zum Druckabfall um 3 bar innerhalb von ca. 6 Stunden auspolymerisiert.

Nach Erkalten, Rest-VC-Entgasung, Abfiltrieren, Waschen und Trocknen erhält man ein rieselfähiges Pulver, dessen mittlerer Korndurchmesser bei 100 bis 150 µm liegt.

Ermittelte Werte für Schlagzähigkeit und Transparenz sind Tabelle 1 zu entnehmen.

b) Mischen von Polyacrylsäureester (PA) und Masse-Polyvinylchlorid (M-PVC)

Beispiele 33 bis 46

100 Teile M-PVC (hergestellt z. B. nach DE-OS 15 20 595) werden im Labormischer mit
55 Teile Polyacrylat-Latex mit 20 Gewichtsprozent Polymeranteil (hergestellt nach den Beispielen 7, 7a, 8, 8a, 12, 12a, 13, 13a, 14, 14a, 15, 15a, 18, 18a)
vermischt und bei 50 °C 12 Stunden im Vakuum getrocknet.

Man erhält ein nicht mehr rieselfähiges, z. B. auf der Walze verarbeitbares Pulver.

Ermittelte Werte für Schlagzähigkeit und Transparenz sind Tabelle 1 zu entnehmen.

c) Mischen von Polyacrylsäureester (PA) und Suspensions-Polyvinylchlorid (S-PVC)

Beispiele 47 bis 60

100 Teile S-PVC (hergestellt z. B. nach DE-OS 15 95 431) werden im Labormischer mit
55 Teile PA-Latex (hergestellt nach den Beispielen 7, 7a, 8, 8a, 12, 12a, 13, 13a, 14, 14a, 15, 15a, 18, 18a)
vermischt und bei 50 °C im Vakuum getrocknet.

Man erhält ein nicht mehr rieselfähiges, z. B. auf der Walze verarbeitbares Pulver.

Ermittelte Werte für Schlagzähigkeit und Transparenz sind Tabelle 1 zu entnehmen.

d) Mischen von PA und Emulsions-Polyvinylchlorid (E-PVC)

Beispiele 61 bis 65

100 Teile ( 5 000 g) E-PVC-Latex mit 45 % PVC (Herstellung z. B. nach DE-OS 25 31 780) und

22,5 Teile (1 125 g) PA-Latex (mit 20 Gewichtsprozent Polymeranteil, Herstellung nach den Beispielen 7 a, 8 a, 12 a, 13 a, 14 a)

werden zusammen in einer Nubilosa-Laborsprühtrocknungsanlage sprühgetrocknet. Man erhält ein begrenzt rieselfähiges Pulver.

Ermittelte Werte für Schlagzähigkeit und Transparenz sind Tabelle 1 zu entnehmen.

e) Heißmischen von Polymerisaten der erfindungsgemäßen phenylsubstituierten Acrylsäureester mit PVC

Beispiele 66 bis 70

Zunächst werden die Polyacrylat-Latices, hergestellt nach den Beispielen 7 a, 8 a, 12 a, 13 a, 14 a, so aufgearbeitet, daß das reine Polymerisat vorliegt. Hierzu werden jeweils von o. a. 250 g Polyacrylat-Latex unter Rühren mit 100 g Methanol und 100 g 5 %iger wäßriger Na-Formiat-Lösung versetzt. Das so ausgefällte Polyacrylat wird auf einer Fritte abfiltriert, mit Methanol und VE-Wasser gewaschen und bei 40 °C 24 Stunden im Vakuum getrocknet. 10 Teile (40 g) von derart erhaltenem Polymerisat werden jeweils mit 90 Teilen (360 g) M-PVC (hergestellt z. B. nach DE-OS 15 95 431) unter Verwendung der für alle Verarbeitungen, später beschriebenen Verarbeitungs-und Stabilisierungshilfsmittel auf der Walze bei 185 °C 5 bis 15 Minuten vermischt. Man erhält ein Walzfell, das in üblicher Weise weiter zu Preßplatten verarbeitet wird.

Ermittelte Werte für Schlagzähigkeit und Transparenz sind Tabelle 1 zu entnehmen.

Tabelle 1

| (X) Modifiziertes Polyvinylchlorid | (Y) Transmission, Schichtdicke 2 mm, Wellenlänge 600 nm | (Z) Kerbschlagzähigkeit in $kJ/m^2$, 4 mm-Preßplatten nach DIN 53 453 |
|---|---|---|
| Masse-Polyvinylchlorid nach DE-OS 15 20 595 (Standardprobe) | 81 | 2 |
| DE-AS 20 13 020 | 57 | 22 |
| Erfindungsgemäß | | |
| Beispiel 19 | 87 | 38 |
| Beispiel 20 | 88 | 43 |
| Beispiel 21 | 84 | 39 |
| Beispiel 22 | 86 | 45 |
| Beispiel 23 | 80 | 39 |
| Beispiel 24 | 80 | 40 |
| Beispiel 25 | 85 | 41 |
| Beispiel 26 | 85 | 46 |
| Beispiel 27 | 84 | 39 |
| Beispiel 28 | 84 | 43 |
| Beispiel 29 | 82 | 22 |
| Beispiel 30 | 82 | 23 |
| Beispiel 31 | 81 | 44 |

Tabelle 1 -Fortsetzung

| (X) | (Y) | (Z) |
|---|---|---|
| Beispiel 32 | 82 | 44 |
| Beispiel 33 | 85 | 33 |
| Beispiel 34 | 85 | 40 |
| Beispiel 35 | 82 | 34 |
| Beispiel 36 | 84 | 42 |
| Beispiel 37 | 79 | 36 |
| Beispiel 38 | 78 | 40 |
| Beispiel 39 | 82 | 40 |
| Beispiel 40 | 82 | 40 |
| Beispiel 41 | 82 | 37 |
| Beispiel 42 | 81 | 41 |
| Beispiel 43 | 78 | 21 |
| Beispiel 44 | 79 | 20 |
| Beispiel 45 | 81 | 41 |
| Beispiel 46 | 79 | 43 |
| Beispiel 47 | 84 | 36 |
| Beispiel 48 | 84 | 36 |
| Beispiel 49 | 81 | 40 |
| Beispiel 50 | 80 | 41 |
| Beispiel 51 | 77 | 36 |
| Beispiel 52 | 78 | 37 |
| Beispiel 53 | 81 | 42 |
| Beispiel 54 | 80 | 44 |
| Beispiel 55 | 79 | 40 |
| Beispiel 56 | 80 | 41 |
| Beispiel 57 | 76 | 22 |
| Beispiel 58 | 78 | 21 |
| Beispiel 59 | 77 | 42 |
| Beispiel 60 | 78 | 42 |
| Beispiel 61 | 80 | 38 |

Tabelle 1 - Fortsetzung

| (X) | (Y) | (Z) |
|---|---|---|
| Beispiel 62 | 80 | 35 |
| Beispiel 63 | 79 | 36 |
| Beispiel 64 | 78 | 33 |
| Beispiel 65 | 77 | 40 |
| Beispiel 66 | 80 | 35 |
| Beispiel 67 | 81 | 34 |
| Beispiel 68 | 78 | 37 |
| Beispiel 69 | 79 | 40 |
| Beispiel 70 | 78 | 39 |

Für die Ausprüfungen wurde folgende Konfektionierungs-Rezeptur angewendet:

| | | |
|---|---|---|
| Polyvinylchlorid (bzw. modifiziertes Polyvinylchlorid) | 100 | Gewichtsteile |
| Ba-Cd-Stabilisator | 2,5 | Gewichtsteile |
| Polyethylen-Gleitmittel | 0,15 | Gewichtsteile |
| Polymethylmethacrylat-Verarbeitungshilfsmittel | 1,2 | Gewichtsteile |
| Flüssiger partieller Fettsäureester des Glycerins | 0,4 | Gewichtsteile |
| Festes neutrales Glycerin-Esterwachs | 0,4 | Gewichtsteile |

Bei der Wertung der Transparenz ist zu bedenken, daß Polyvinylchlorid aufgrund seiner Neigung zur Zersetzung beim Verarbeitungsprozeß, verglichen mit anderen Thermoplasten, in besonderer Weise stabilisiert werden muß. Hierdurch wird die Transparenz, verglichen mit anderen Thermoplasten, verschlechtert. Masse-Polyvinylchlorid als

reinstes Polyvinylchlorid sollte die bei diesem Thermoplasten größtmögliche Transparenz zeigen. Wenn daher ein schlagfestes, d. h. modifiziertes Polyvinylchlorid Transparenzen aufweist, die nahe an die Transparenz des reinen Masse- Polyvinylchlorids heranreichen, so müßten diese Transparenzen annähernd das auf diesem Gebiete höchstmögliche darstellen. Zeigt sich aber, wie durch einige unserer Beispiele belegt wurde, daß das modifizierte Polyvinylchlorid noch deutlich bessere Transparenzen aufweist als Masse-Polyvinylchlorid, so handelt es sich um einen echten überraschenden Effekt.

Dabei muß weiterhin in Betracht gezogen werden, daß die Transparenz, auch bei Masse-Polyvinylchlorid, von der jeweiligen Rezeptur, d. h. den (für die Verarbeitung unerläßlichen) Zusätzen an Gleitmittel, Stabilisatoren und dergleichen abhängig ist und nur für absolut gleiche Rezepturen und natürlich gleiche Schichtdicke Vergleiche gezogen werden dürfen.

Des weiteren ist noch auf die besonders hohe Schlagzähigkeit des erfindungsgemäß modifizierten Polyvinylchlorids hinzuweisen.

Patentansprüche:

1. Phenylsubstituierter Acrylsäureester der Formel

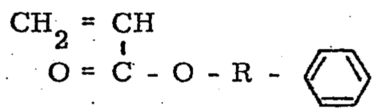

, in der

R einen geradkettigen oder verzweigten Alkylenrest mit 3 bis 4 Kohlenstoffatomen bedeutet, der gegebenenfalls durch eine Ethersauerstoffbrücke unterbrochen ist, wobei der geradkettige Anteil mindestens 3 Kohlenstoffatome enthält.

2. Phenylsubstituierter Acrylsäureester der Formel

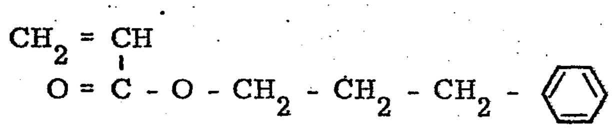

3. Verwendung einer Verbindung der Formel

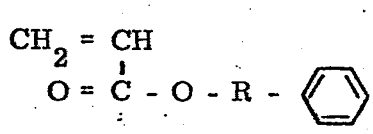

, in der

R einen geradkettigen oder verzweigten Alkylenrest mit 3 bis 4 Kohlenstoffatomen bedeutet, der gegebenenfalls durch eine Ethersauerstoffbrücke unterbrochen ist, wobei der geradkettige Anteil mindestens 3 Kohlenstoffatome enthält, zur Herstellung von Polymeren durch übliche Polymerisation in Emulsion, Suspension, Masse oder Lösung.

4. Verwendung nach Anspruch 3,
dadurch gekennzeichnet,
daß die Polymerisation in Gegenwart von bis zu 30 Gewichtsprozent an aliphatischen Acrylsäureestern mit 4 bis 12 Kohlenstoffatomen

im Alkoholteil durchgeführt wird.

5. Verwendung nach den Ansprüchen 3 und 4, dadurch gekennzeichnet, daß die Polymerisation in Gegenwart vernetzend wirkender Verbindungen durchgeführt wird und/oder daß im Anschluß an die Polymerisation ein Umsatz mit vernetzend wirkenden Verbindungen durchgeführt wird.

FIG. 1

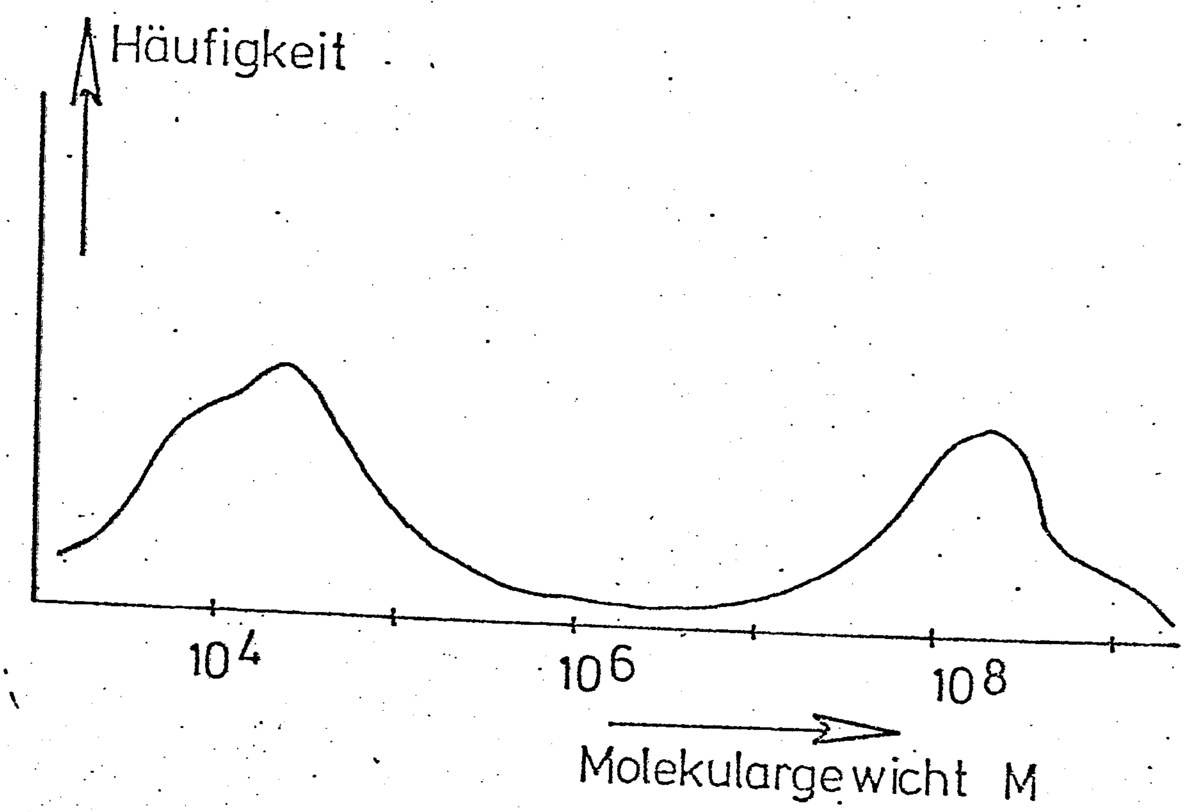


FIG. 2

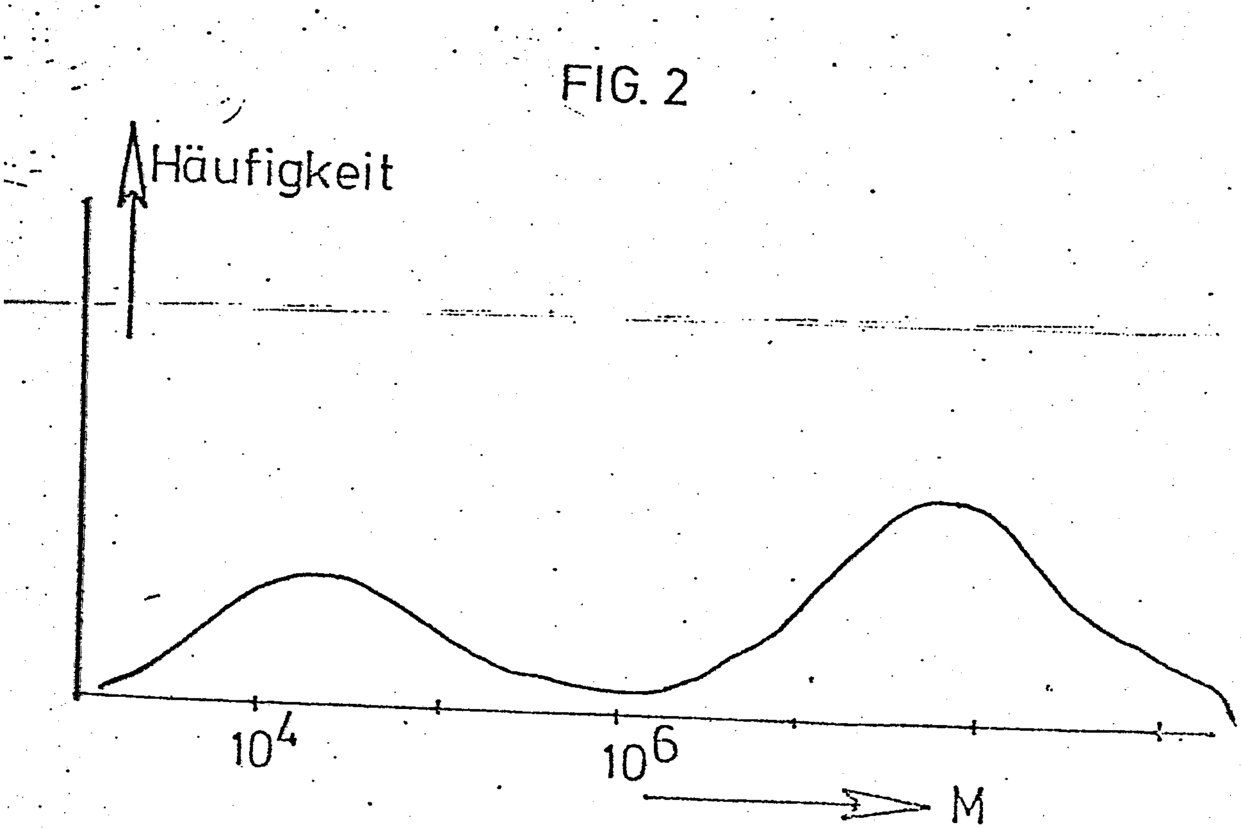


O. Z. 3805

FIG. 3

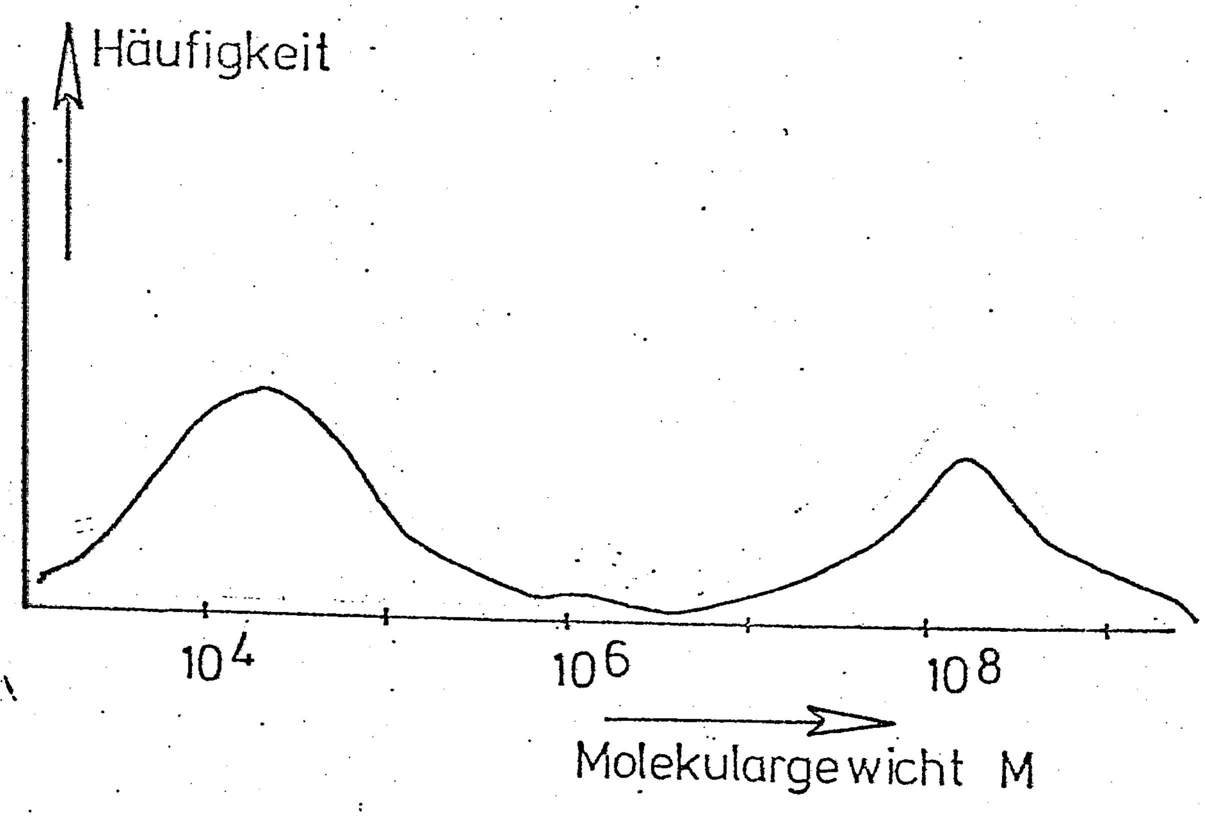


FIG. 4

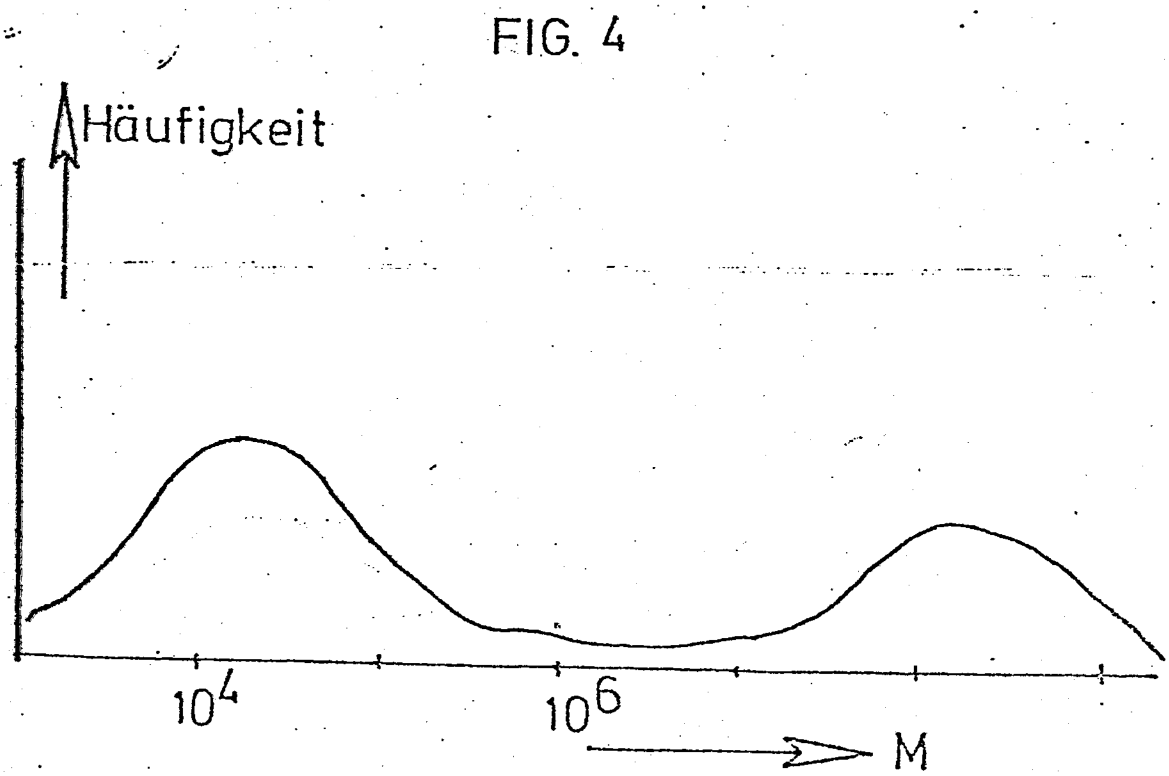


O. Z. 3805

FIG. 5

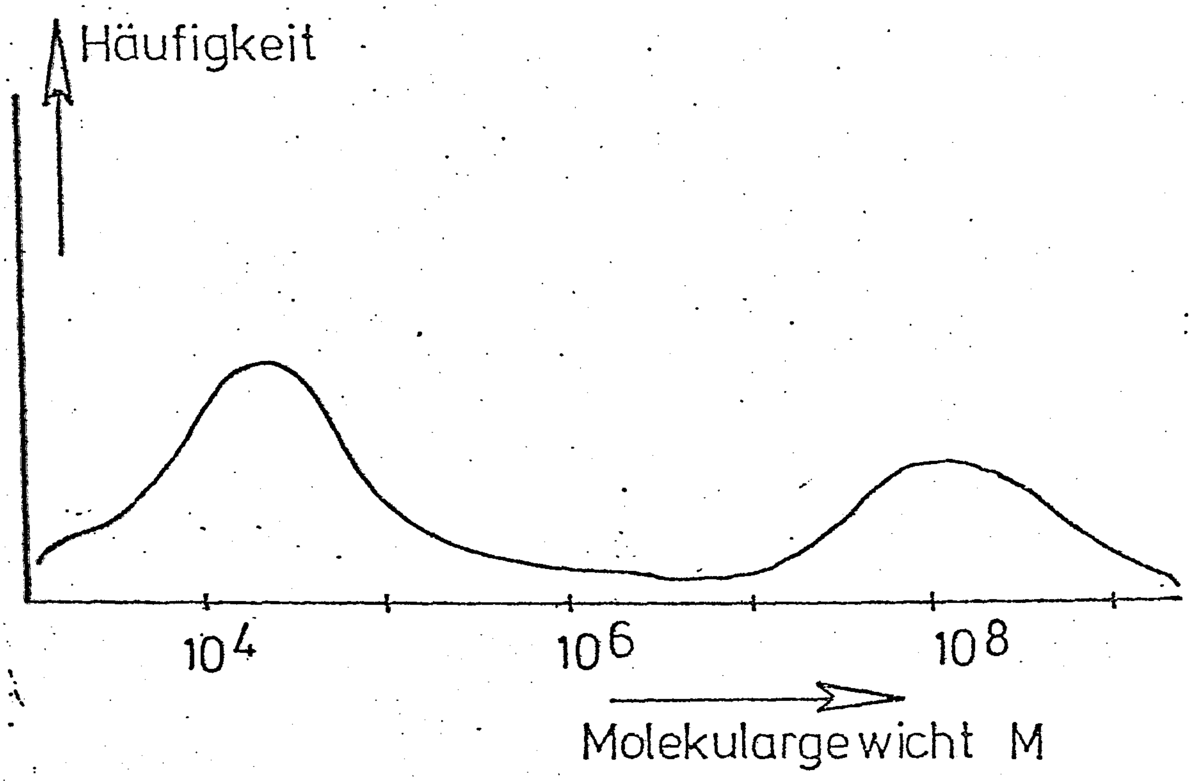
Häufigkeit
10^4
10^6
10^8
Molekulargewicht M

FIG. 6

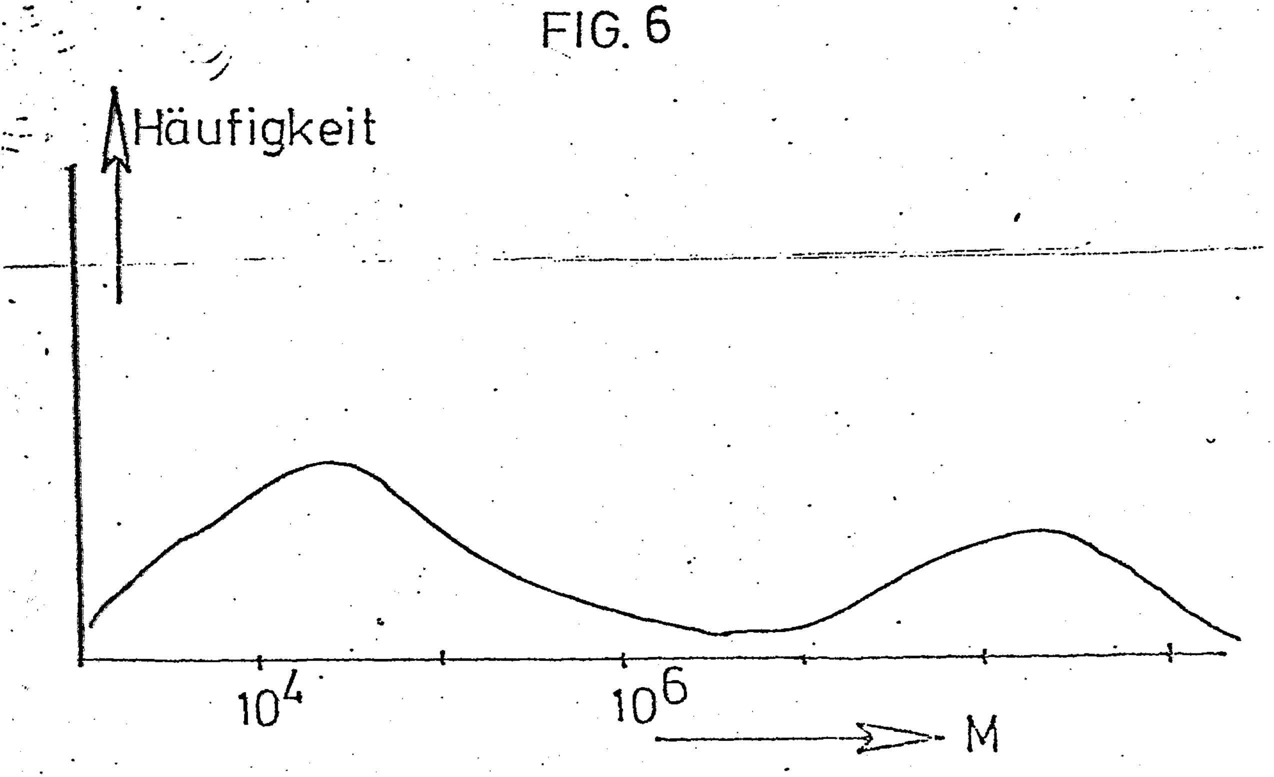
Häufigkeit
10^4
10^6
M

FIG. 7

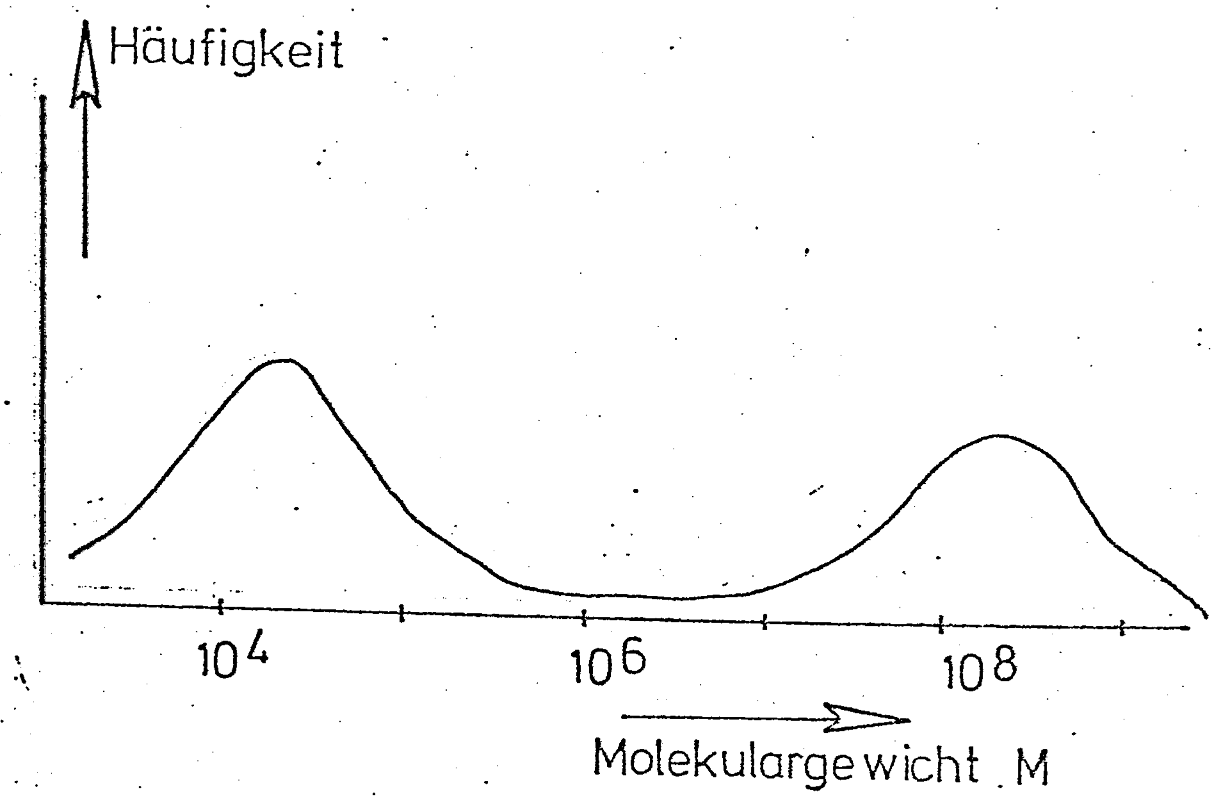
Häufigkeit
10^4
10^6
10^8
Molekulargewicht M

FIG. 8

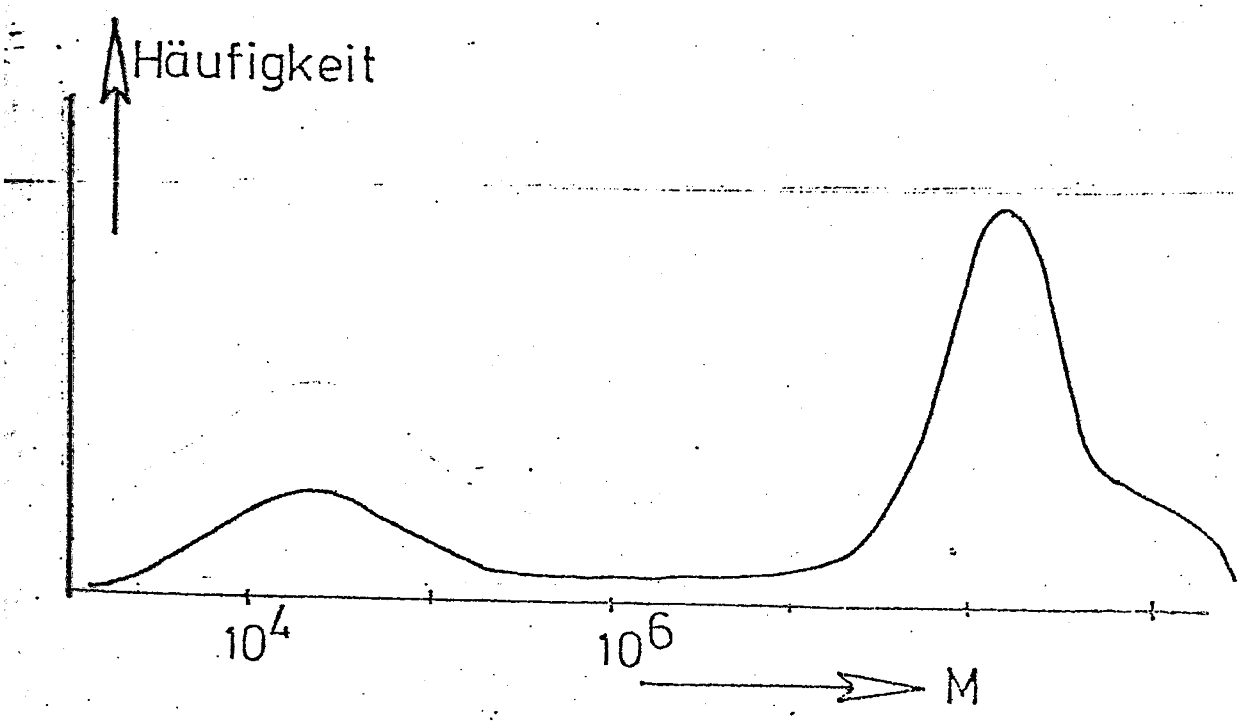
Häufigkeit
10^4
10^6
M

FIG. 9

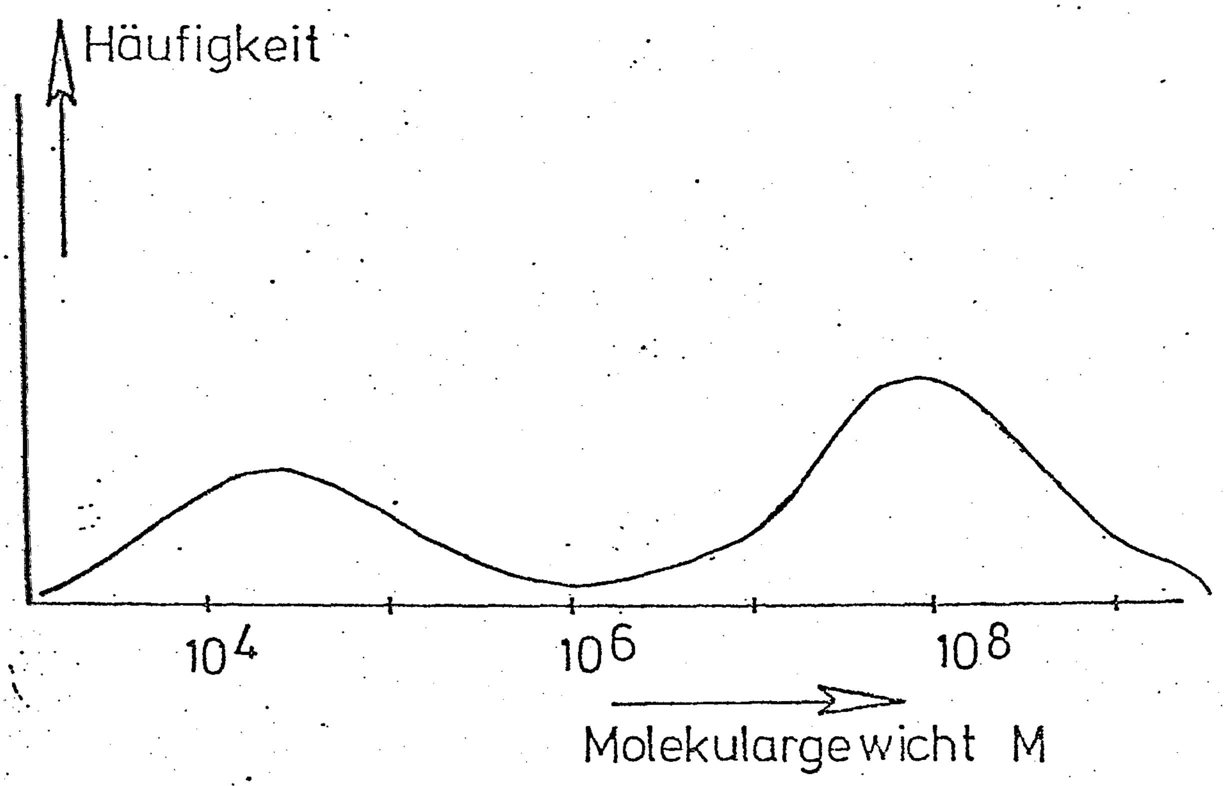
Häufigkeit
10⁴
10⁶
10⁸
Molekulargewicht M

FIG. 10

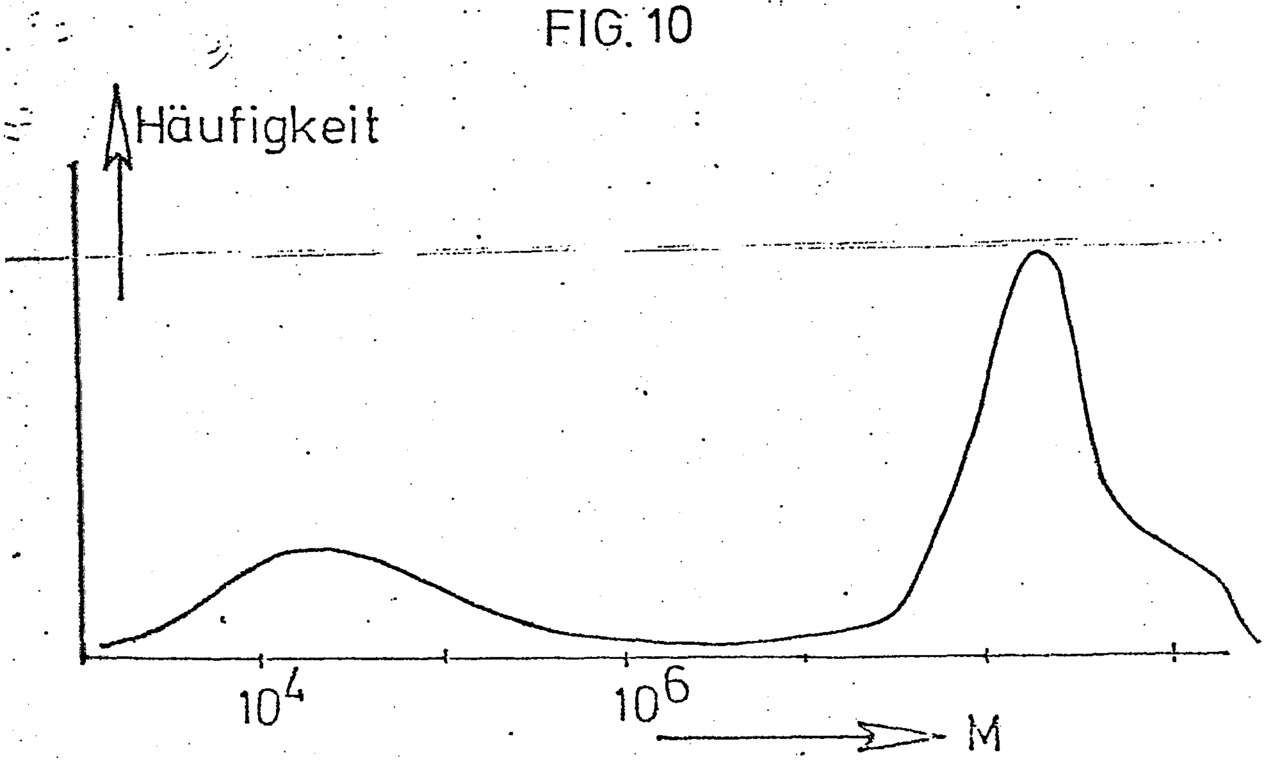
Häufigkeit
10⁴
10⁶
M

FIG. 11

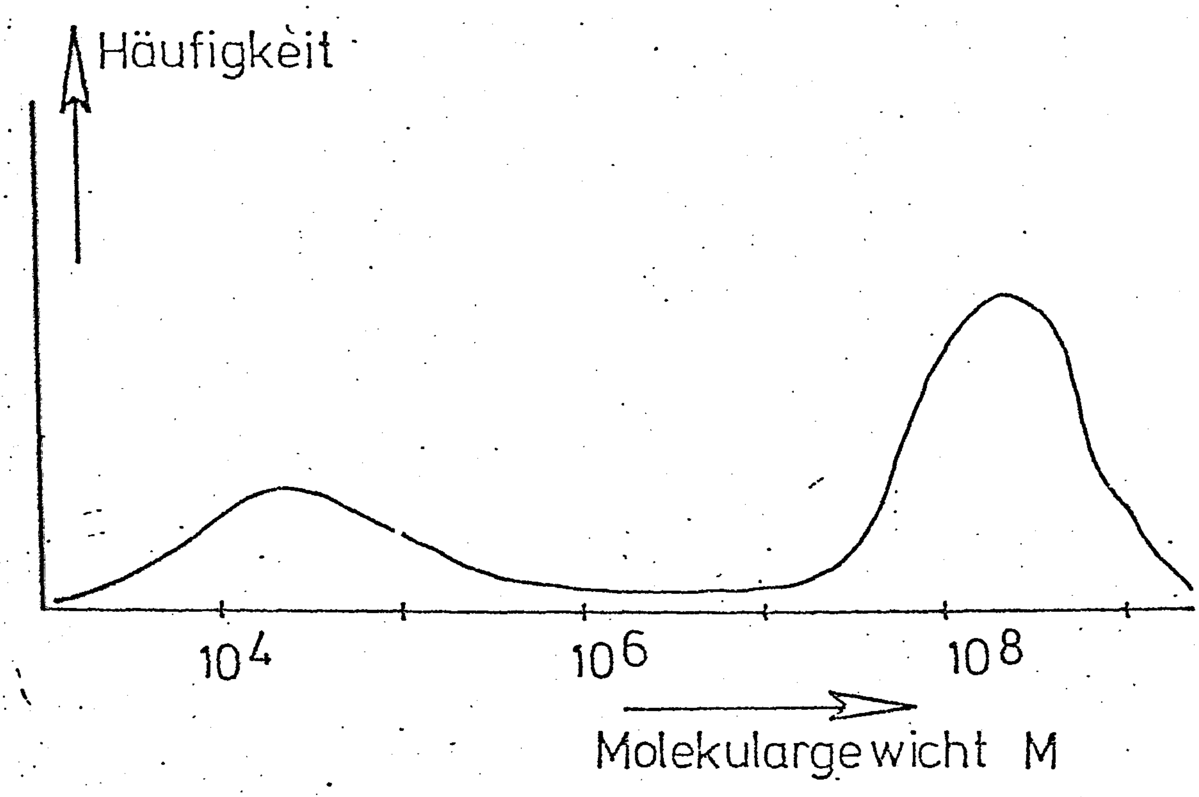
Häufigkeit
$10^4$
$10^6$
$10^8$
Molekulargewicht M

FIG. 12

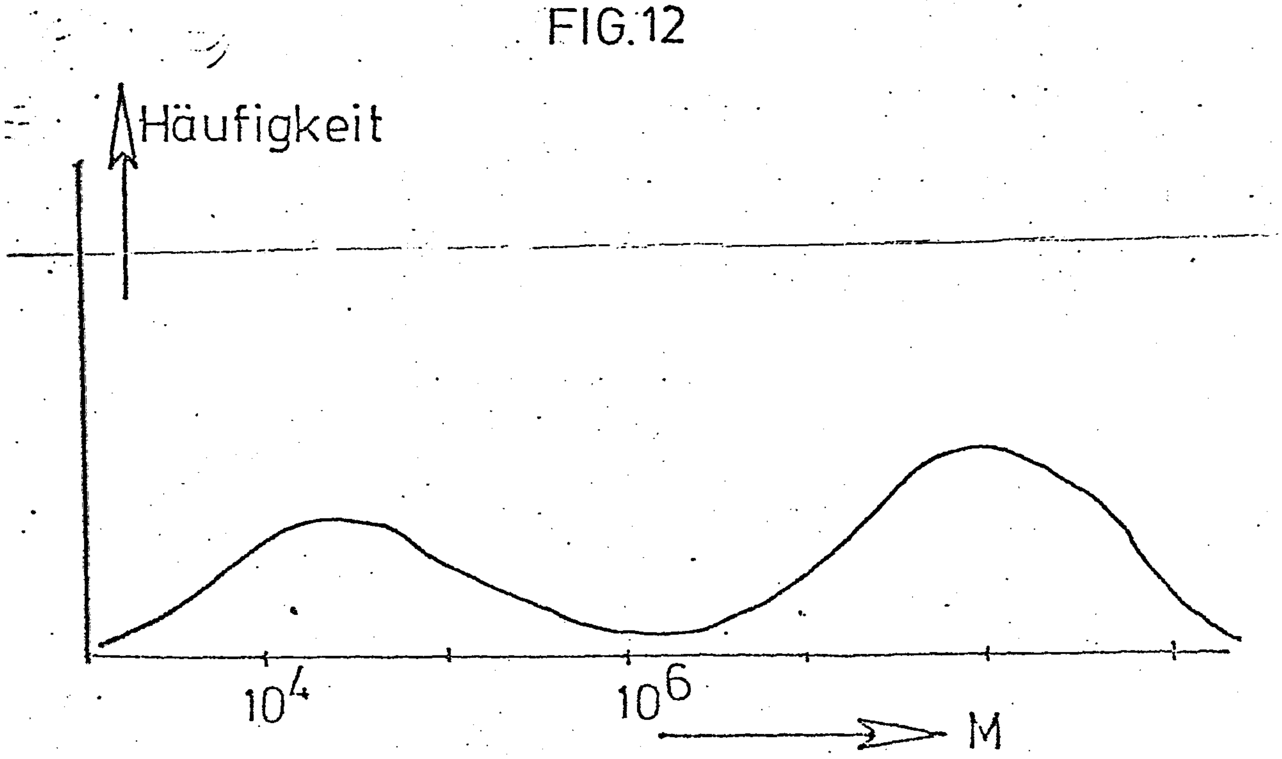
Häufigkeit
$10^4$
$10^6$
M

FIG. 13

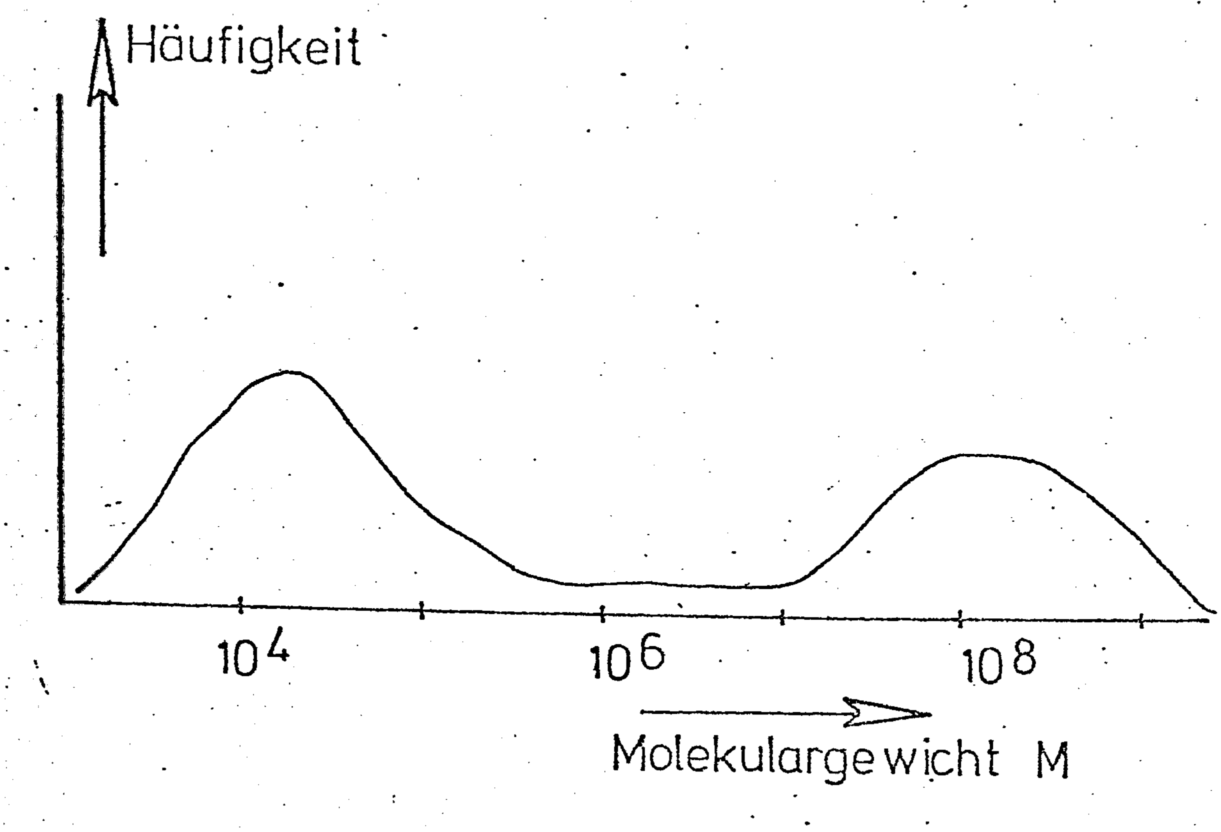
Häufigkeit
10^4
10^6
10^8
Molekulargewicht M

FIG. 14

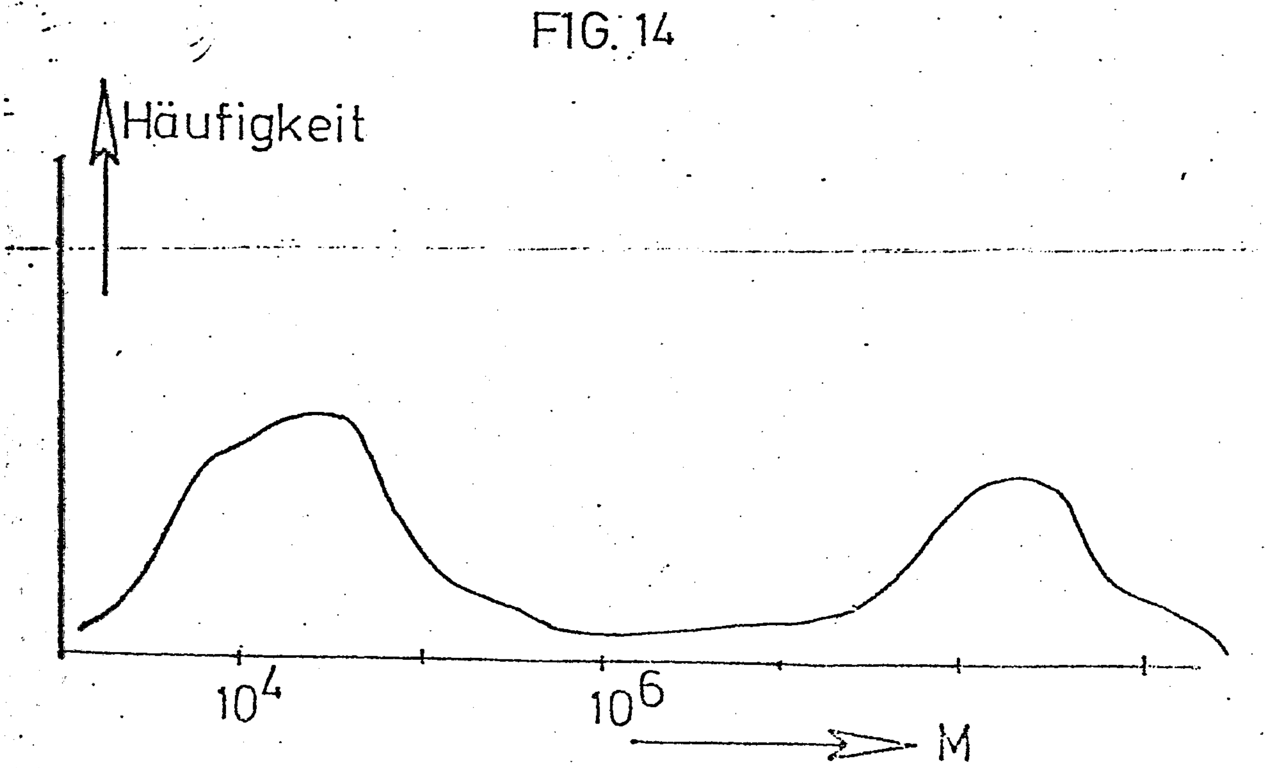
Häufigkeit
10^4
10^6
M

FIG.15

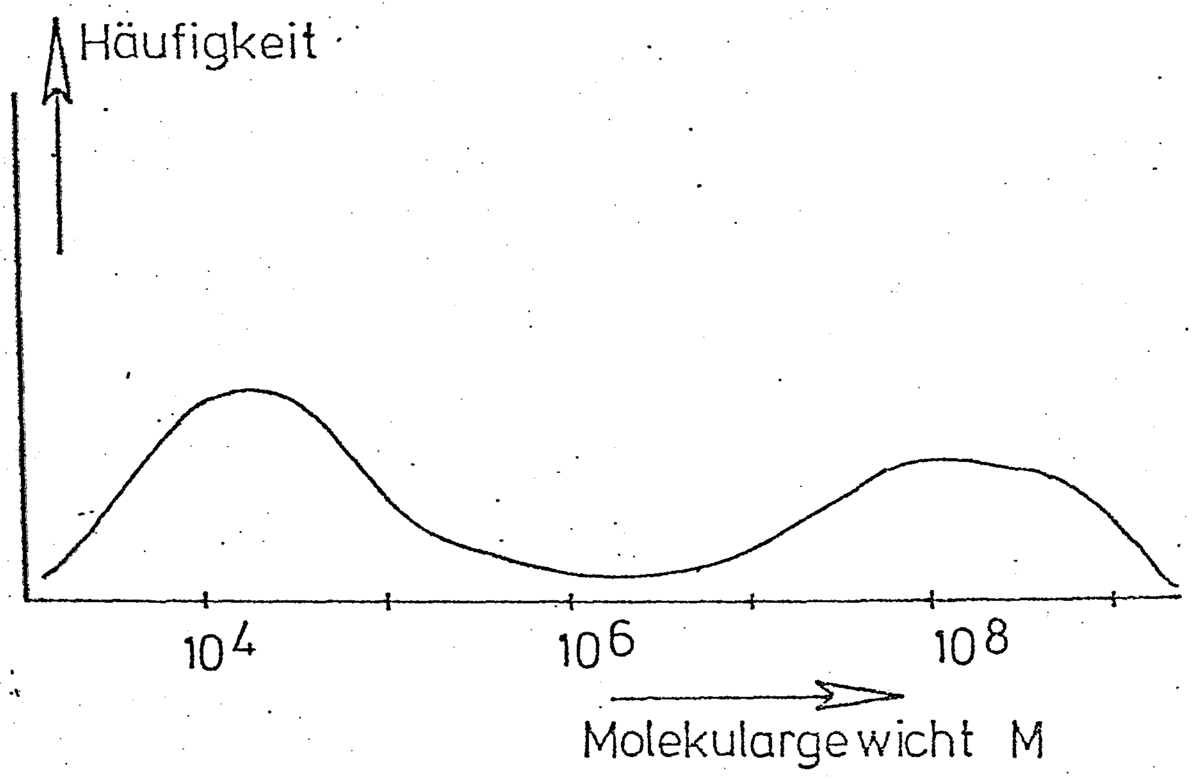
Häufigkeit
10^4
10^6
10^8
Molekulargewicht M

FIG. 16

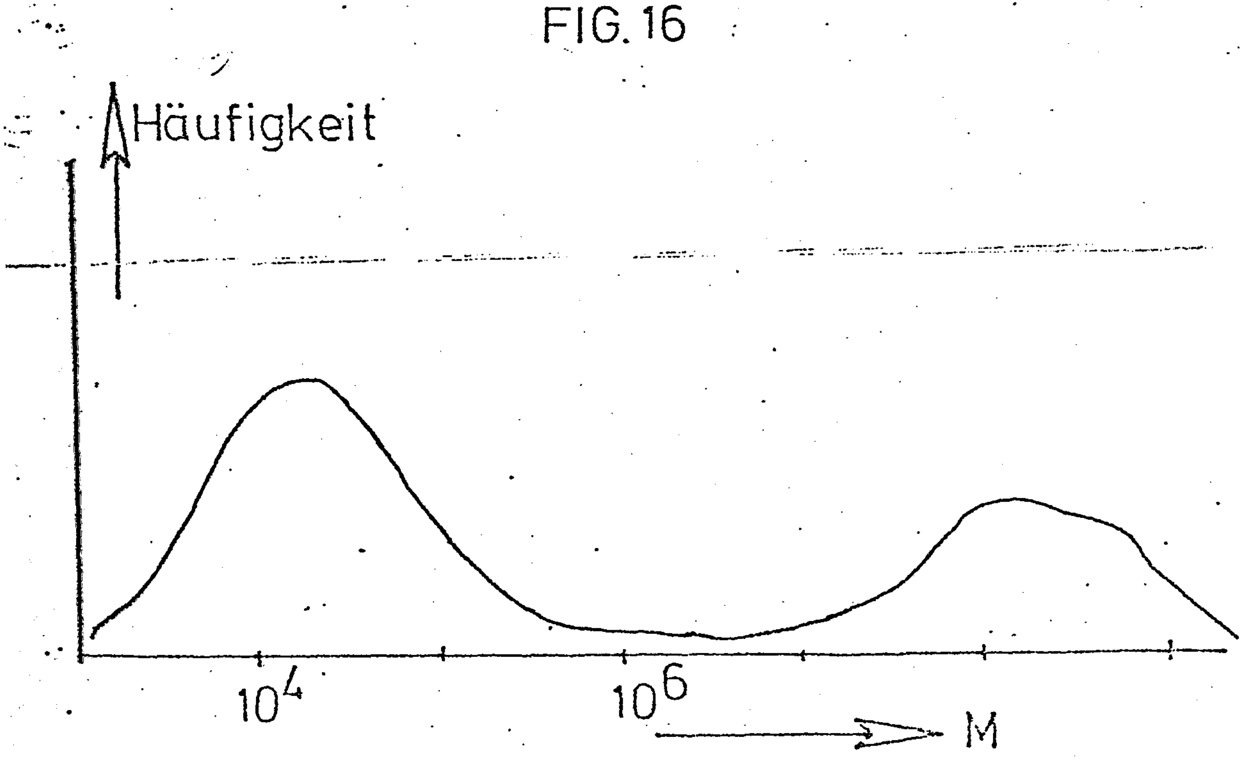
Häufigkeit
10^4
10^6
M

FIG. 17

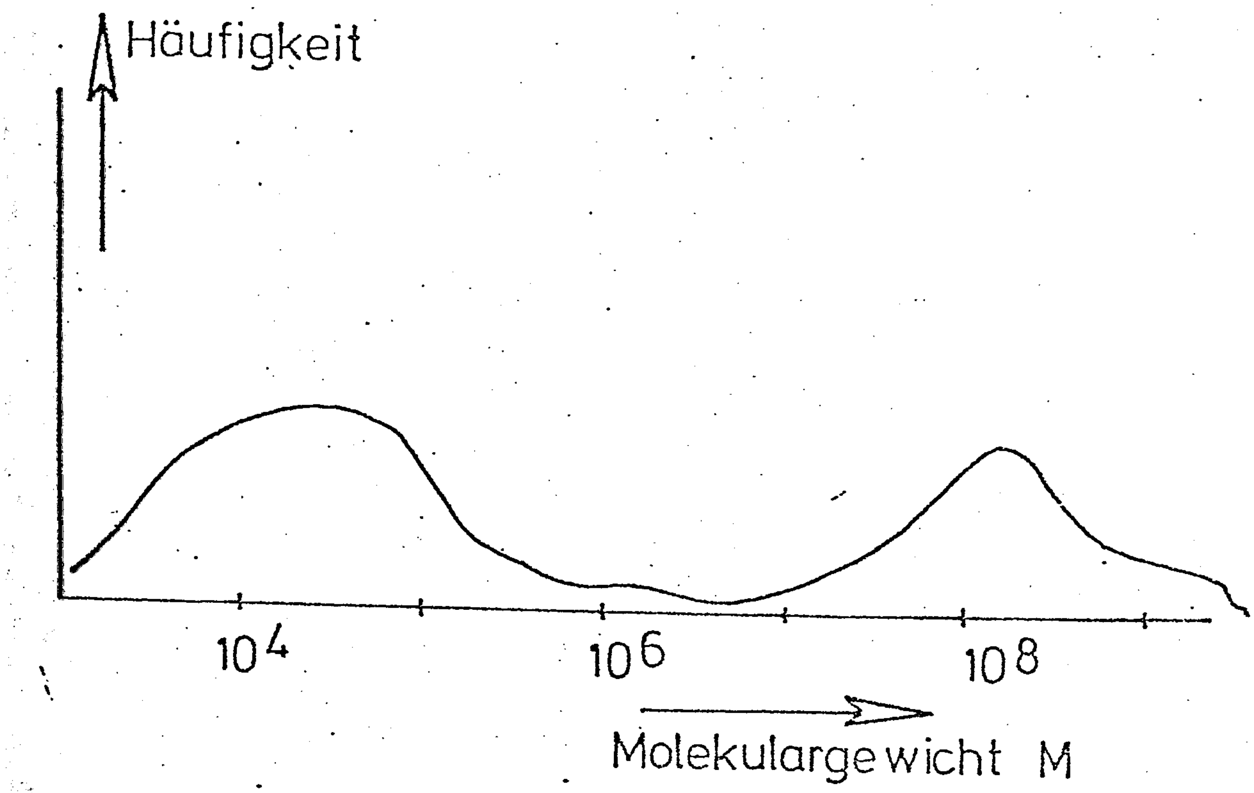
Häufigkeit
10^4
10^6
10^8
Molekulargewicht M

FIG. 18

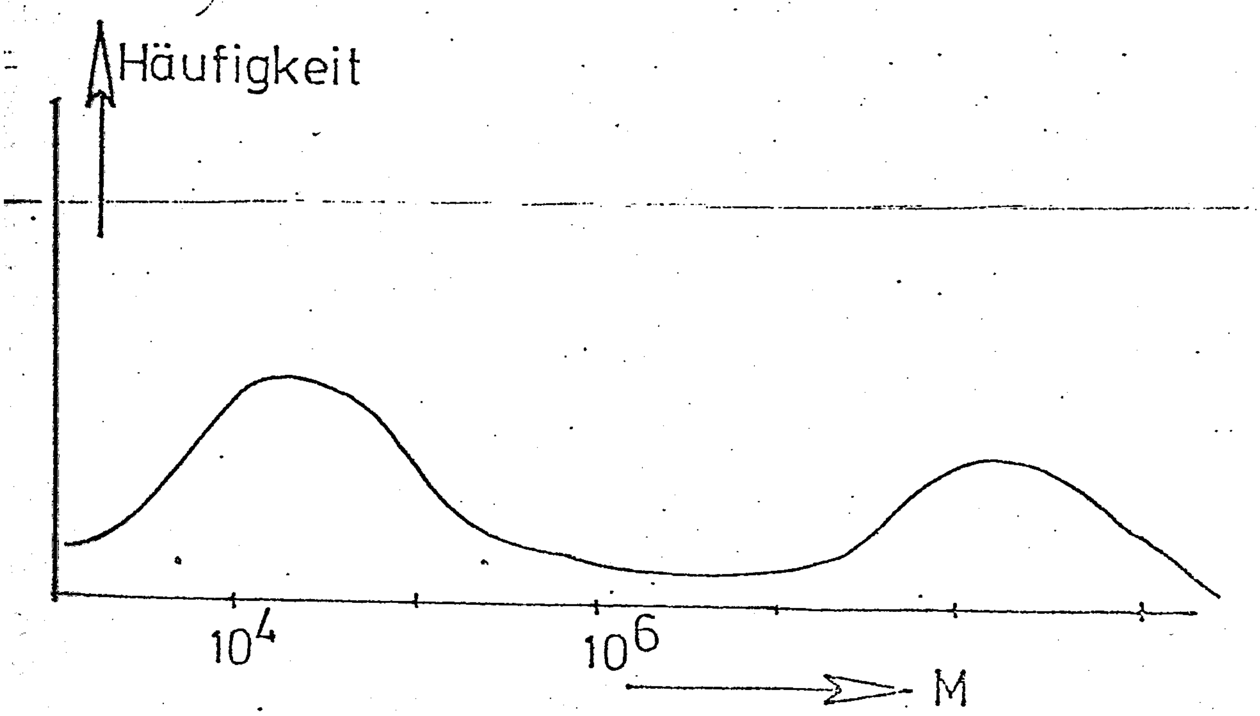
Häufigkeit
10^4
10^6
M

FIG. 19

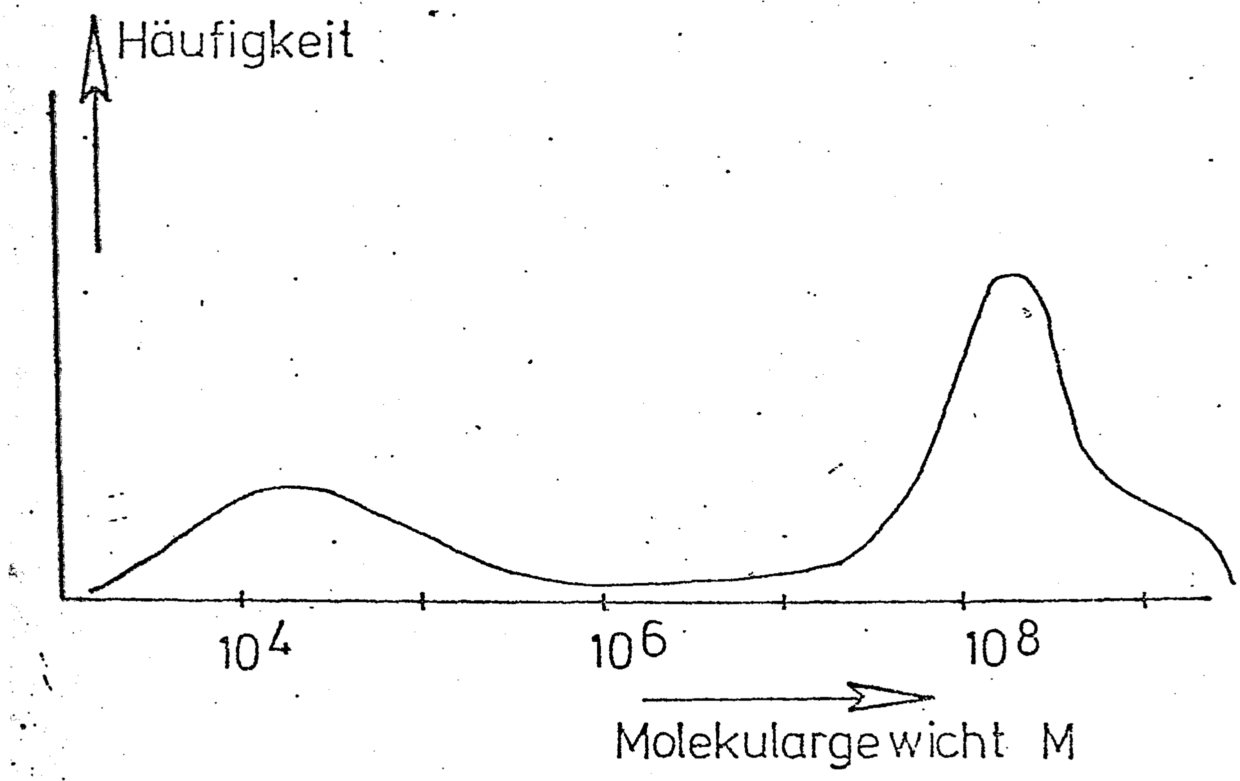
Häufigkeit
10^4
10^6
10^8
Molekulargewicht M

FIG. 20

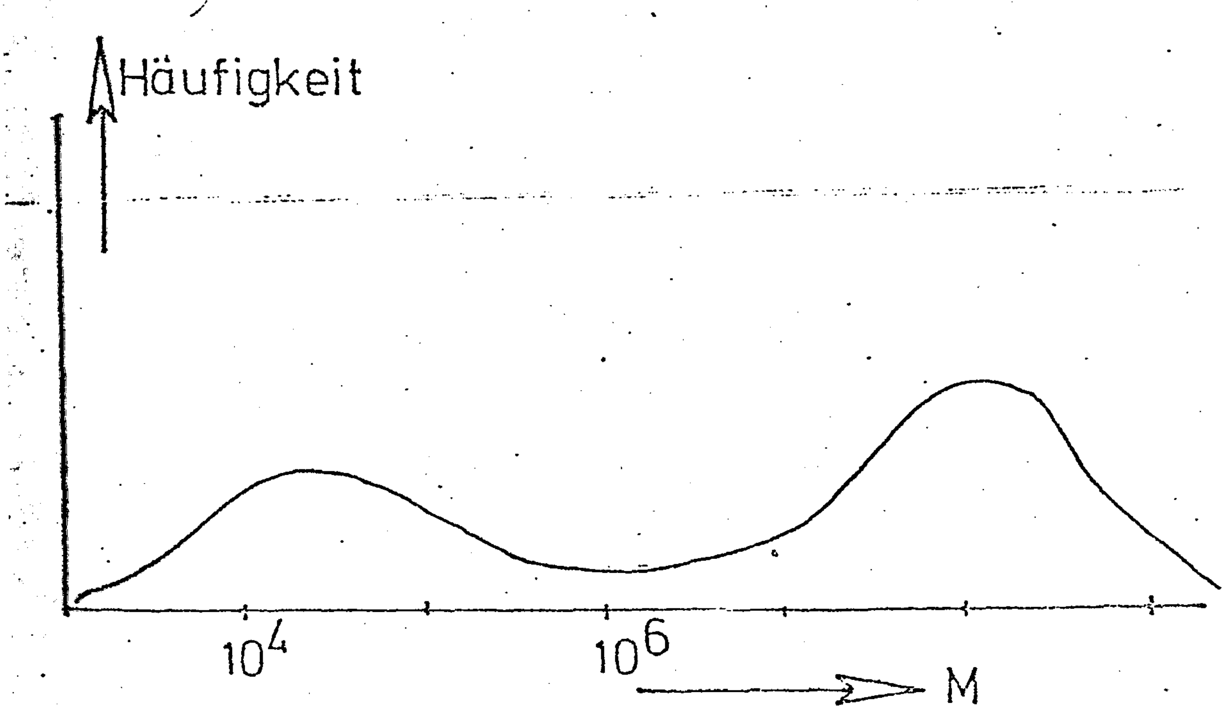
Häufigkeit
10^4
10^6
M

FIG. 21

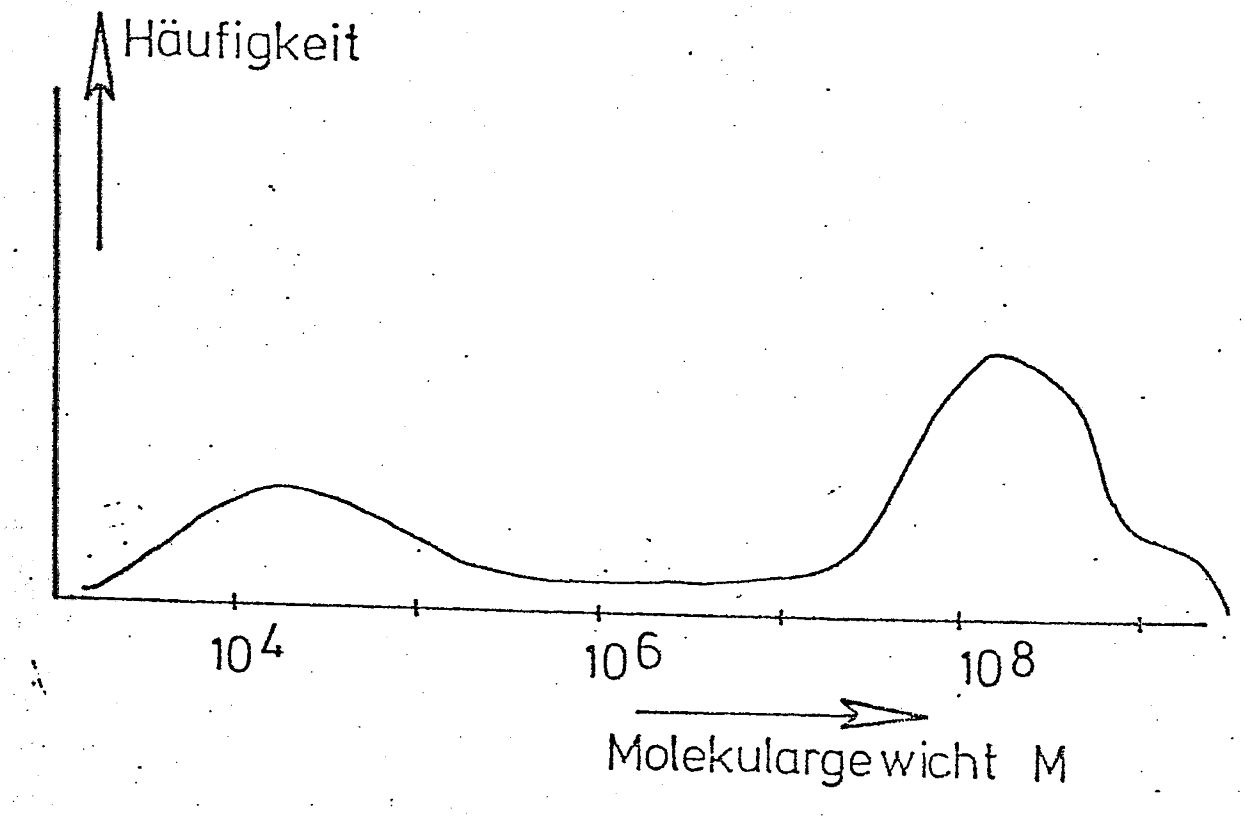
Häufigkeit
10^4
10^6
10^8
Molekulargewicht M

FIG. 22

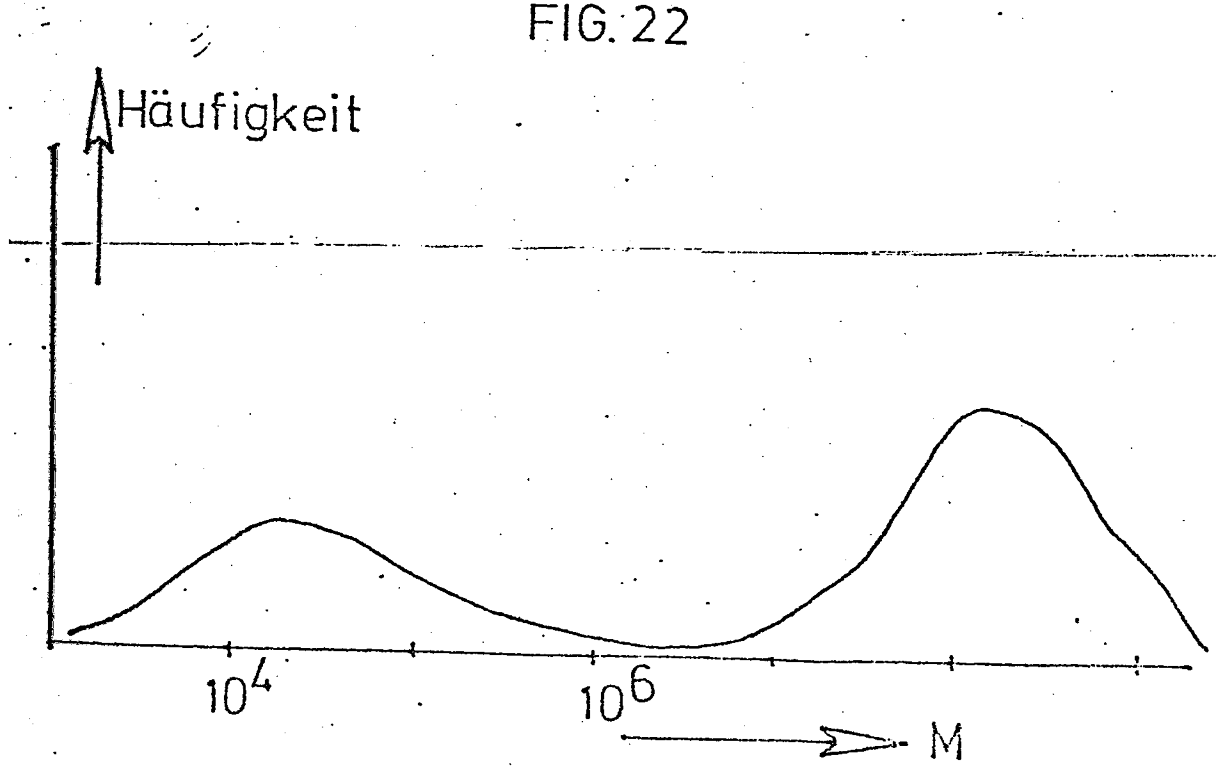
Häufigkeit
10^4
10^6
M

FIG. 23

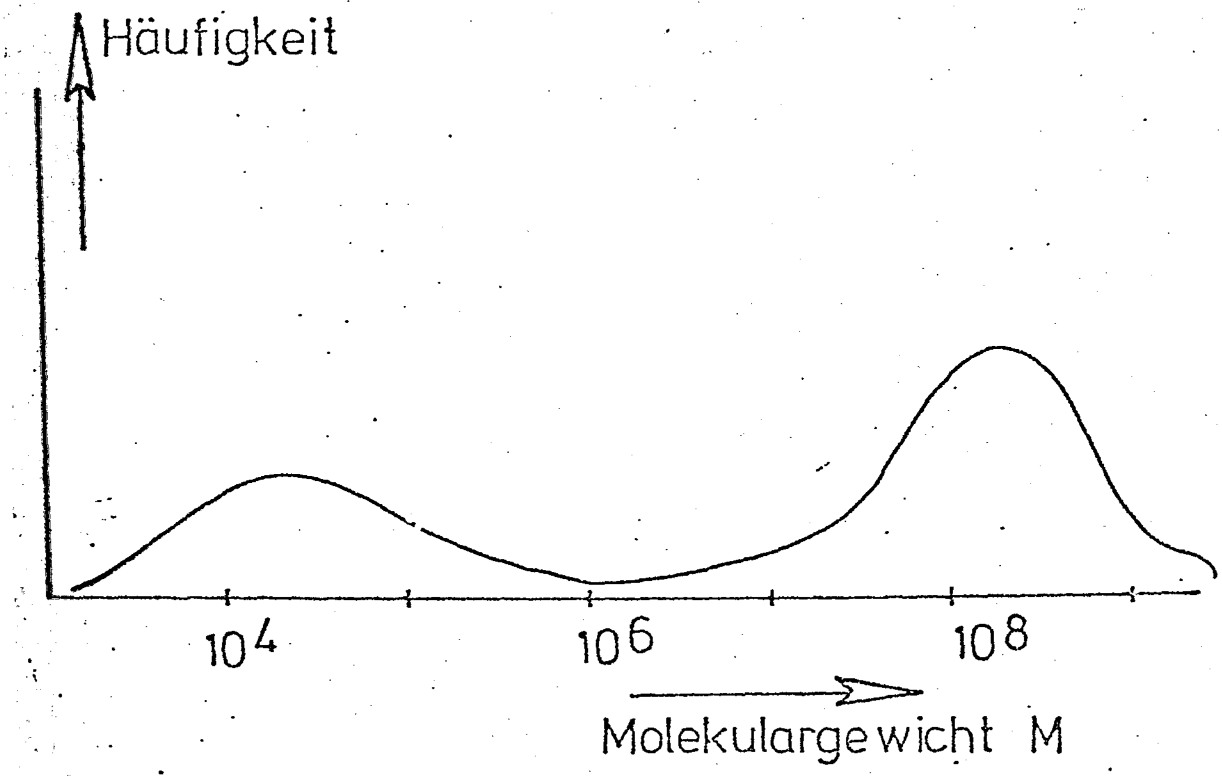
Häufigkeit
10^4
10^6
10^8
Molekulargewicht M

FIG. 24

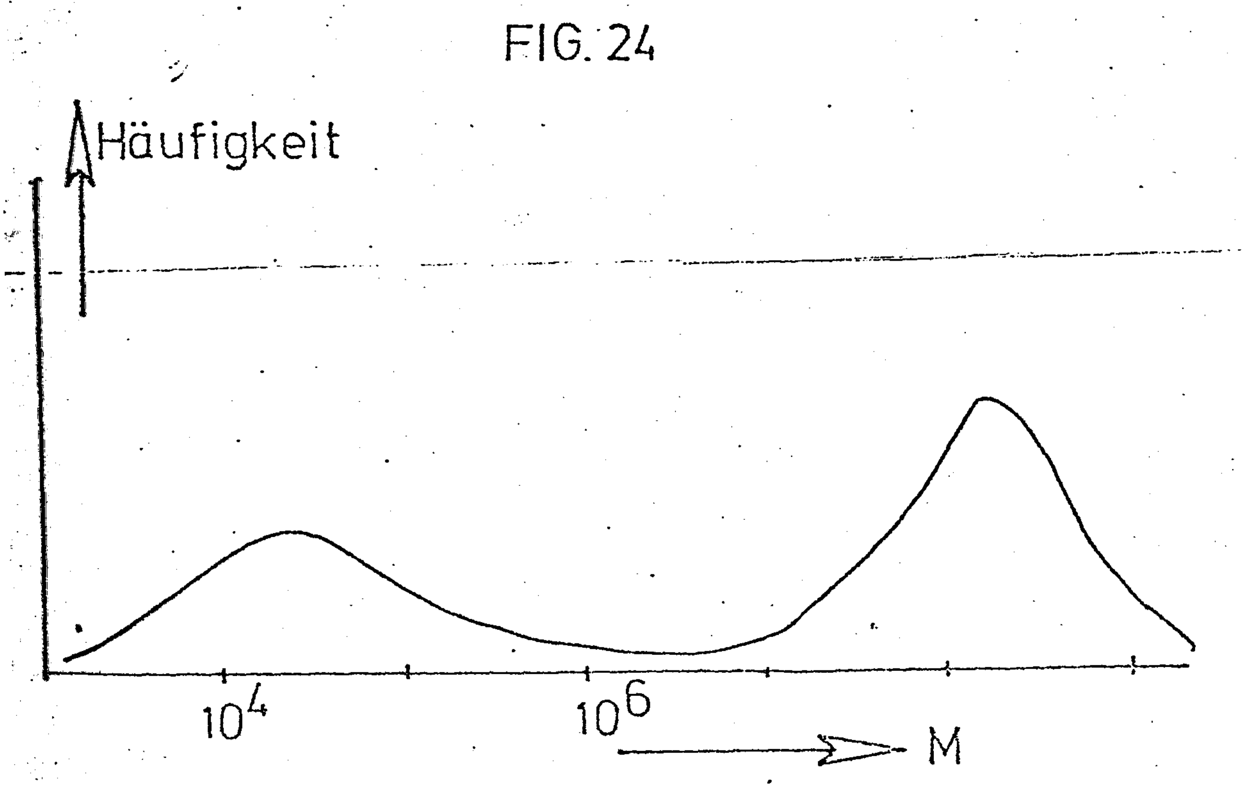
Häufigkeit
10^4
10^6
M

0093856

Europäisches Patentamt

# EUROPÄISCHER RECHERCHENBERICHT

Nummer der Anmeldung

EP 83 10 2409

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y,A | Chemical Abstracts Band 63, Nr. 13, 20 December 1965, Columbus, Ohio, USA K. YOKOTA et al. "N.M.R. study on the stereoregularity of poly(omega-phenylalkyl methacrylates) obtained with a radical initiator. High syndiotacticity of poly(2-phenylethyl methacrylate)", Spalte 18 287e-f & Kogyo Kagaku Zasshi, Band 68, Nr. 8, 1965, Seiten 1473-1477<br>--- | 2,3 | C 07 C 69/54<br>C 08 F 20/18 |
| Y | Chemical Abstracts Band 76, Nr. 20, 15 Mai 1972, Columbus, Ohio, USA Seite 31, Spalte 2, Abstract Nr. 113892e & JP-A-71-40690<br>--- | 3 | |
| | | | RECHERCHIERTE SACHGEBIETE (Int. Cl. 3) |
| Y | DE-A-2 110 189 (SUMITOMO CHEMICAL) * Seite 17 *<br>--- | 3 | C 07 C 69/54<br>C 08 F 20/18 |
| Y,D<br>A | US-A-3 751 449 (R. GOBRAN et al.) * Spalte 3, Formel II; Zusammenfassung *<br>----- | 1,3 | |

Der vorliegende Recherchenbericht wurde für alle Patentansprüche erstellt.

| Recherchenort | Abschlußdatum der Recherche | Prüfer |
|---|---|---|
| BERLIN | 03-08-1983 | KNAACK M |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument